# EUROPEAN PATENT SPECIFICATION

(11) **EP 3 874 784 B1**
(45) Date of publication and mention of the grant of the patent: **14.09.2022**
(21) Application number: 19790330.5
(22) Date of filing: 15.10.2019
(51) Int. Cl.: H04L 9/40, H04W 12/106, H04W 12/122

(54) **REPORTING INTEGRITY PROTECTION FAILURE DURING CONNECTION RESUME OR RE-ESTABSLISHMENT**
MELDUNG EINES INTEGRITÄTSSCHUTZAUSFALLS WÄHREND DER WIEDERAUFNAHME ODER WIEDERHERSTELLUNG EINER VERBINDUNG
SIGNALEMENT D'ÉCHEC DE PROTECTION D'INTÉGRITÉ PENDANT UNE REPRISE OU UN RÉTABLISSEMENT DE CONNEXION

(30) Priority: 30.10.2018 US 201862752670 P; 30.10.2018 US 201862752801 P
(43) Date of publication of application: 08.09.2021
(73) Proprietor: TELEFONAKTIEBOLAGET LM ERICSSON (PUBL), 164 83 Stockholm (SE)
(72) Inventor: DA SILVA, Icaro L. J., 170 77 SOLNA (SE); RUGELAND, Patrik, 117 58 STOCKHOLM (SE); TEYEB, Oumer, 171 44 Solna (SE)
(74) Representative: Ericsson
(86) International application number: PCT/SE2019/051014
(87) International publication number: WO 2020/091648

(56) References cited:
- INTEL CORPORATION: "SRB3 IP Check failure handling", 3GPP DRAFT; R2-1710621-SRB3-IP-FAILURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20171009 - 20171013 29 September 2017 (2017-09-29), XP051355048, Retrieved from the Internet: URL:http://www.3gpp.org/ftp/tsg_ran/WG2_RL 2/TSGR2_99bis/Docs/ [retrieved on 2017-09-29]
- ZTE CORPORATION: "Consideration on the remaining security issues", 3GPP DRAFT; R2-1708134 CONSIDERATION ON THE REMAINING SECURITY ISSUES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Berlin, Germany; 20170821 - 20170825 20 August 2017 (2017-08-20), XP051318037, Retrieved from the Internet: URL:http://www.3gpp.org/ftp/Meetings_3GPP_ SYNC/RAN2/Docs/ [retrieved on 2017-08-20]
- CATT: "DRB IP check failure", 3GPP DRAFT; R2-1801825, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20180226 - 20180302 13 February 2018 (2018-02-13), XP051398972, Retrieved from the Internet: URL:http://www.3gpp.org/ftp/tsg%5Fran/WG2% 5FRL2/TSGR2%5F101/Docs/ [retrieved on 2018-02-13]

## Description

### TECHNICAL FIELD

The present application relates generally to the field of wireless communication networks, and more specifically to reporting failures that can occur during communication between a wireless device and a node in a wireless communication network, which can facilitate detection of whether the node is a fake node, in addition to other failure causes.

### INTRODUCTION

Generally, all terms used herein are to be interpreted according to their ordinary meaning in the relevant technical field, unless a different meaning is clearly given and/or is implied from the context in which it is used. All references to a/an/the element, apparatus, component, means, step, *etc.* are to be interpreted openly as referring to at least one instance of the element, apparatus, component, means, step, *etc.,* unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

Long Term Evolution (LTE) is an umbrella term for so-called fourth generation (4G) radio access technologies developed within the Third-Generation Partnership Project (3GPP) and initially standardized in Releases 8 and 9, also known as Evolved UTRAN (E-UTRAN). LTE is targeted at various licensed frequency bands and is accompanied by improvements to non-radio aspects commonly referred to as System Architecture Evolution (SAE), which includes Evolved Packet Core (EPC) network. LTE continues to evolve through subsequent releases that are developed according to standards-setting processes with 3GPP and its working groups (WGs), including the Radio Access Network (RAN) WG, and sub-working groups (*e.g.,* RAN1, RAN2, *etc.*)*.*

LTE Release 10 (Rel-10) supports bandwidths larger than 20 MHz. One important requirement on Rel-10 is to assure backward compatibility with LTE Release-8. This should also include spectrum compatibility. As such, a wideband LTE Rel-10 carrier (*e.g*., wider than 20 MHz) should appear as a number of carriers to an LTE Rel-8 ("legacy") terminal. Each such carrier can be referred to as a Component Carrier (CC). For an efficient use of a wide carrier also for legacy terminals, legacy terminals can be scheduled in all parts of the wideband LTE Rel-10 carrier. One exemplary way to achieve this is by means of Carrier Aggregation (CA), whereby a Rel-10 terminal can receive multiple CCs, each preferably having the same structure as a Rel-8 carrier. Similarly, one of the enhancements in LTE Rel-11 is an enhanced Physical Downlink Control Channel (ePDCCH), which has the goals of increasing capacity and improving spatial reuse of control channel resources, improving inter-cell interference coordination (ICIC), and supporting antenna beamforming and/or transmit diversity for control channel.

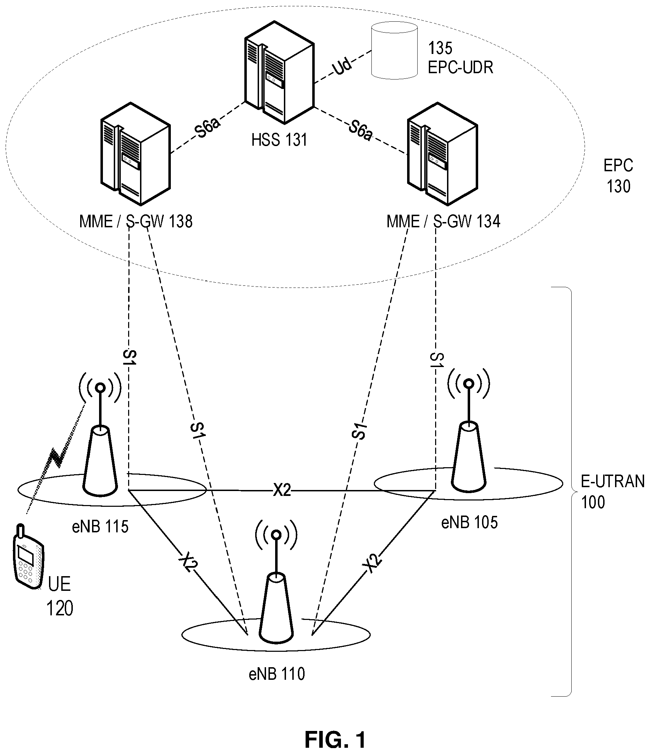

An overall exemplary architecture of a network comprising LTE and SAE is shown in Figure 1. E-UTRAN 100 comprises one or more evolved Node B's (eNB), such as eNBs 105, 110, and 115, and one or more user equipment (UE), such as UE 120. As used within 3GPP specifications, "user equipment" (or "UE") can refer to any wireless communication device (*e.g*., smartphone or computing device) that is capable of communicating with 3GPP-standard-compliant network equipment, including E-UTRAN and earlier-generation RANs (e.g., UTRAN/"3G" and/or GERAN/"2G") as well as later-generation RANs in some cases.

As specified by 3GPP, E-UTRAN 100 is responsible for all radio-related functions in the network, including radio bearer control, radio admission control, radio mobility control, scheduling, and dynamic allocation of resources to UEs in uplink (UL) and downlink (DL), as well as security of the communications with the UE. These functions reside in the eNBs, such as eNBs 105, 110, and 115, which communicate with each other via an X1 interface. The eNBs also are responsible for the E-UTRAN interface to EPC 130, specifically the S1 interface to the Mobility Management Entity (MME) and the Serving Gateway (SGW), shown collectively as MME/S-GWs 134 and 138 in Figure 1.

In general, the MME/S-GW handles both the overall control of the UE and data flow between UEs (such as UE 120) and the rest of the EPC. More specifically, the MME processes the signaling (e.g., control plane, CP) protocols between UEs and EPC 130, which are known as the Non-Access Stratum (NAS) protocols. The S-GW handles all Internet Protocol (IP) data packets (e.g., user plane, UP) between UEs and EPC 130, and serves as the local mobility anchor for the data bearers when a UE moves between eNBs, such as eNBs 105, 110, and 115.

EPC 130 can also include a Home Subscriber Server (HSS) 131, which manages user- and subscriber-related information. HSS 131 can also provide support functions in mobility management, call and session setup, user authentication and access authorization. The functions of HSS 131 can be related to the functions of legacy Home Location Register (HLR) and Authentication Centre (AuC) functions or operations.

In some embodiments, HSS 131 can communicate with a user data repository (UDR) - labelled EPC-UDR 135 in Figure 1 - via a Ud interface. The EPC-UDR 135 can store user credentials after they have been encrypted by AuC algorithms. These algorithms are not standardized (i.e., vendor-specific), such that encrypted credentials stored in EPC-UDR 135 are inaccessible by any other vendor than the vendor of HSS 131.

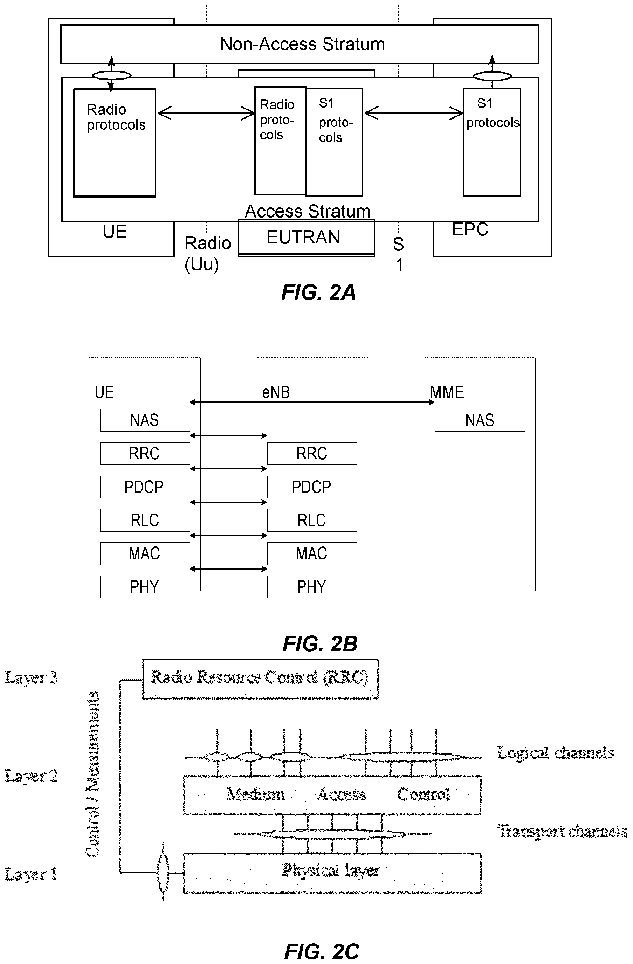

Figure 2A shows a high-level block diagram of an exemplary LTE architecture in terms of its constituent entities - UE, E-UTRAN, and EPC - and high-level functional division into the Access Stratum (AS) and the Non-Access Stratum (NAS). Figure 2A also illustrates two particular interface points, namely Uu (UE/E-UTRAN Radio Interface) and S 1 (E-UTRAN/EPC interface), each using a specific set of protocols, *i.e.,* Radio Protocols and S1 Protocols. Each of the two protocols can be further segmented into user plane (UP) and control plane (CP) protocol functionality. Over the Uu interface between UE and E-UTRAN, the UP carries user information (e.g., data packets) while the CP carries control information.

Figure 2B illustrates a block diagram of an exemplary CP protocol stack on the Uu interface comprising Physical (PHY), Medium Access Control (MAC), Radio Link Control (RLC), Packet Data Convergence Protocol (PDCP), and Radio Resource Control (RRC) layers. The PHY layer is concerned with how and what characteristics are used to transfer data over transport channels on the LTE radio interface. The MAC layer provides data transfer services on logical channels, maps logical channels to PHY transport channels, and reallocates PHY resources to support these services. The RLC layer provides error detection and/or correction, concatenation, segmentation, and reassembly, reordering of data transferred to or from the upper layers. The PHY, MAC, and RLC layers perform identical functions for both the UP and the CP. The PDCP layer provides ciphering/deciphering and integrity protection for UP and CP, as well as other UP functions such as header compression.

In general, the RRC layer (shown in Figure 2B) controls communications between a UE and an eNB at the radio interface, as well as the mobility of a UE crossing cells and/or eNBs. RRC is the highest CP layer in the AS, and also transfers NAS messages from above RRC. Such NAS messages are used to control communications between a UE and the EPC.

Figure 2C shows a block diagram of an exemplary LTE radio interface protocol architecture from the perspective of the PHY. The interfaces between the various layers are provided by Service Access Points (SAPs), indicated by the ovals in Figure 2C. The PHY interfaces with MAC and RRC layers described above. The MAC provides different logical channels to the RLC layer (also described above), characterized by the type of information transferred, whereas the PHY provides a transport channel to the MAC, characterized by how the information is transferred over the radio interface. In providing this transport service, the PHY performs various functions including error detection and correction; rate-matching and mapping of the coded transport channel onto physical channels; power weighting, modulation, and demodulation of physical channels; transmit diversity, beamforming, and multiple input multiple output (MIMO) antenna processing; and sending radio measurements to higher layers (e.g., RRC).

In general, a physical channel corresponds to a set of resource elements (REs) carrying information that originates from higher layers. Downlink (*i.e.,* eNB to UE) physical channels provided by the LTE PHY include Physical Downlink Shared Channel (PDSCH), Physical Multicast Channel (PMCH), Physical Downlink Control Channel (PDCCH), Relay Physical Downlink Control Channel (R-PDCCH), Physical Broadcast Channel (PBCH), Physical Control Format Indicator Channel (PCFICH), and Physical Hybrid ARQ Indicator Channel (PHICH). In addition, the LTE PHY DL includes various reference signals, synchronization signals, and discovery signals.

PDSCH is the main physical channel used for unicast DL data transmission, as well as for transmission of RAR (random access response), certain system information blocks, and paging information. PBCH carries the basic system information required by the UE to access the network. PDCCH is used for transmitting DL control information (DCI), mainly scheduling decisions, required for reception of PDSCH, and for UL scheduling grants enabling transmission on PUSCH.

Uplink (*i.e.,* UE to eNB) physical channels provided by the LTE PHY include Physical Uplink Shared Channel (PUSCH), Physical Uplink Control Channel (PUCCH), and Physical Random-Access Channel (PRACH). In addition, the LTE PHY UL includes various reference signals including demodulation reference signals (DM-RS), which are transmitted to aid the eNB in the reception of an associated PUCCH or PUSCH; and sounding reference signals (SRS), which are not associated with any UL channel. PUSCH is the UL counterpart to the PDSCH. PUCCH is used by UEs to transmit UL control information, including HARQ acknowledgements, channel state information reports, *etc.* PRACH is used for random access preamble transmission.

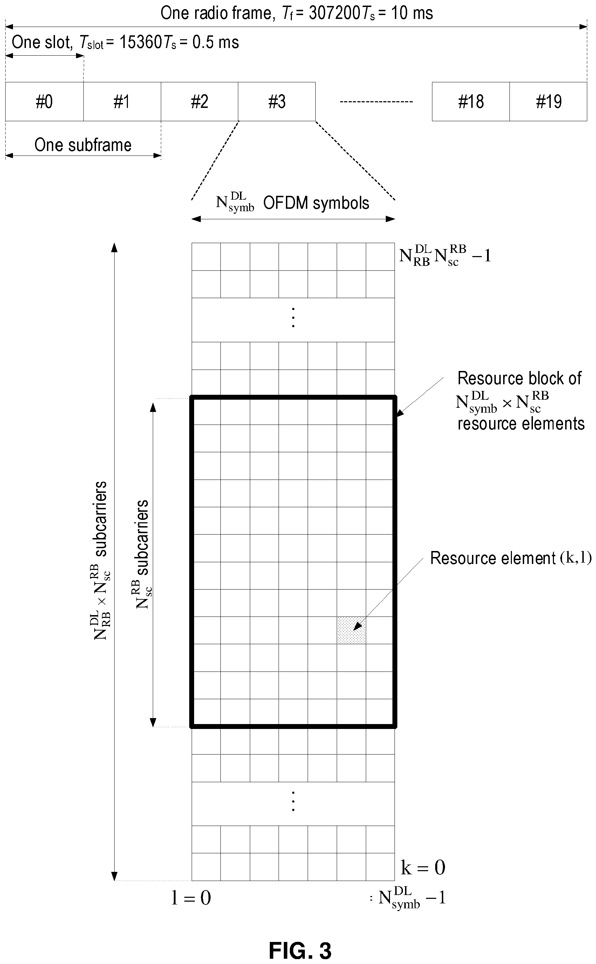

The multiple access scheme for the LTE PHY is based on Orthogonal Frequency Division Multiplexing (OFDM) with a cyclic prefix (CP) in the downlink, and on Single-Carrier Frequency Division Multiple Access (SC-FDMA) with a cyclic prefix in the uplink. To support transmission in paired and unpaired spectrum, the LTE PHY supports both Frequency Division Duplexing (FDD) (including both full- and half-duplex operation) and Time Division Duplexing (TDD). Figure 3 shows an exemplary radio frame structure ("type 1") used for LTE FDD downlink (DL) operation. The DL radio frame has a fixed duration of 10 ms and consists of 20 slots, labeled 0 through 19, each with a fixed duration of 0.5 ms. A 1-ms subframe comprises two consecutive slots where subframe *i* consists of slots 2*i* and 2*i* + 1. Each exemplary FDD DL slot consists of N^{DL}_{symb} OFDM symbols, each of which is comprised of N_{sc} OFDM subcarriers. Exemplary values of N^{DL}_{symb} can be 7 (with a normal CP) or 6 (with an extended-length CP) for subcarrier bandwidth of 15 kHz. The value of N_{sc} is configurable based upon the available channel bandwidth. Since persons of ordinary skill in the art are familiar with the principles of OFDM, further details are omitted in this description.

As shown in Figure 3, a combination of a particular subcarrier in a particular symbol is known as a resource element (RE). Each RE is used to transmit a particular number of bits, depending on the type of modulation and/or bit-mapping constellation used for that RE. For example, some REs may carry two bits using QPSK modulation, while other REs may carry four or six bits using 16- or 64-QAM, respectively. The radio resources of the LTE PHY are also defined in terms of physical resource blocks (PRBs). A PRB spans N^{RB}_{sc} sub-carriers over the duration of a slot (*i.e.,* N^{DL}_{symb} symbols), where N^{RB}_{sc} is typically either 12 (with a 15-kHz sub-carrier bandwidth) or 24 (7.5-kHz bandwidth). A PRB spanning the same N^{RB}_{sc} subcarriers during an entire subframe (*i.e.,* 2N^{DL}_{symb} symbols) is known as a PRB pair. Accordingly, the resources available in a subframe of the LTE PHY DL comprise N^{DL}_{RB} PRB pairs, each of which comprises 2N^{DL}_{symb}• N^{RB}_{sc} REs. For a normal CP and 15-KHz sub-carrier bandwidth, a PRB pair comprises 168 REs.

One exemplary characteristic of PRBs is that consecutively numbered PRBs (*e.g.,* PRBᵢ and PRBᵢ₊₁) comprise consecutive blocks of subcarriers. For example, with a normal CP and 15-KHz sub-carrier bandwidth, PRB₀ comprises sub-carrier 0 through 11 while PRB₁ comprises sub-carriers 12 through 23. The LTE PHY resource also can be defined in terms of virtual resource blocks (VRBs), which are the same size as PRBs but may be of either a localized or a distributed type. Localized VRBs can be mapped directly to PRBs such that VRB *n*_{VRB} corresponds to PRB*n*_{PRB} = *n*_{VRB}. On the other hand, distributed VRBs may be mapped to non-consecutive PRBs according to various rules, as described in 3GPP Technical Specification (TS) 36.213 or otherwise known to persons of ordinary skill in the art. However, the term "PRB" shall be used in this disclosure to refer to both physical and virtual resource blocks. Moreover, the term "PRB" will be used henceforth to refer to a resource block for the duration of a subframe, *i.e.,* a PRB pair, unless otherwise specified.

An exemplary LTE FDD UL radio frame can be configured in a similar manner as the exemplary FDD DL radio frame shown in Figure 3. Using terminology consistent with the above DL description, each UL slot consists of N^{UL}_{symb} OFDM symbols, each of which is comprised of N_{sc} OFDM subcarriers.

As discussed above, the LTE PHY maps the various DL and UL physical channels to the resources shown in Figures 3A and 3B, respectively. For example, the PHICH carries HARQ feedback (*e.g*., ACK/NAK) for UL transmissions by the UEs. Similarly, PDCCH carries scheduling assignments, channel quality feedback (*e.g.,* CSI) for the UL channel, and other control information. Likewise, a PUCCH carries uplink control information such as scheduling requests, CSI for the downlink channel, HARQ feedback for eNB DL transmissions, and other control information. Both PDCCH and PUCCH can be transmitted on aggregations of one or several consecutive control channel elements (CCEs), and a CCE is mapped to the physical resource based on resource element groups (REGs), each of which is comprised of a plurality of REs. For example, a CCE can comprise nine (9) REGs, each of which can comprise four (4) REs.

As briefly mentioned above, the LTE RRC layer (shown in Figures 2B-C) controls communications between a UE and an eNB at the radio interface, as well as the mobility of a UE between cells in the E-UTRAN. Prior to Rel-13, there were two (2) RRC states defined for a UE. More specifically, after the UE is powered ON it will be in the RRC_IDLE state until the RRC connection is established, at which time it will transition to RRC_CONNECTED state (where data transfer can occur). After a connection is released, the UE returns to RRC_IDLE. In RRC_IDLE state, the UE's radio is active on a discontinuous reception (DRX) schedule configured by upper layers. During DRX active periods, an RRC_IDLE UE receives system information (SI) broadcast by a serving cell, performs measurements of neighbor cells to support cell reselection, and monitors a paging channel on PDCCH for pages from the EPC via eNB. An RRC_IDLE UE is known in the EPC and has an assigned IP address, but is not known to the serving eNB (e.g., there is no stored context).

In LTE Rel-13, a mechanism was introduced for the UE to be suspended by the network in a suspended state similar to RRC_IDLE but with some important differences. First, the suspended state is not a third RRC "state" alongside RRC_IDLE and RRC_CONNECTED; rather it can be viewed as a "substate" of RRC_IDLE. Second, both the UE and the serving eNB store the UE's AS (e.g., Sl-AP) context and RRC context after suspension. Later when the suspended UE needs to resume a connection (e.g., to send UL data), instead of going through the conventional service request procedure, the suspeneded UE merely sends an *RRCConnectionResume-Request* message to the eNB. The eNB resumes the S1AP context and responds with a *RRCConnectionResume* message. There is no elaborate exchange of security context between MME and eNB and no setup of AS security context. The preserved AS and RRC contexts are merely resumed from where they were suspended earlier. Reducing the signaling can provide reduced UE latency (*e.g.* for smart phones accessing Internet) and reduced UE signaling, which can lead to reduced UE energy consumption, particularly for machine type communication (MTC) devices that send very little data (*i.e.,* signaling being a primary consumer of energy).

In 3GPP, a study item on a new radio interface for 5G has recently been completed and 3GPP has now continued with the effort to standardize this new radio interface, often abbreviated by NR (New Radio). While LTE was primarily designed for user-to-user communications, 5G/NR networks are envisioned to support both high single-user data rates (*e.g.,* 1 Gb/s) and large-scale, machine-to-machine communication involving short, bursty transmissions from many different devices that share the frequency bandwidth.

As part of the 3GPP standardization work on 5G, it has been decided that NR should support an RRC_INACTIVE state with similar properties as the suspended state in LTE Rel-13. The RRC_INACTIVE state has slightly different properties in that it is a separate RRC state and not part of RRC_IDLE as in LTE. Additionally, the CN/RAN connection (NG or N2 interface) is kept alive during RRC_INACTIVE while it was suspended in LTE.

Even so, there are various problems and/or issues related to a UE transitioning from RRC_INACTIVE to RRC_CONNECTED state in NR, which is based on a "resume" procedure. For example, a UE's Resume procedure can fail for various reasons, and it can be quite difficult for the network to determine what caused the failure and, consequently, any remedial actions required. There can also be similar problems and/or issues related to a UE re-establishing an RRC connection in NR, via a "re-establishment" procedure. Document "SRB3 IP Check failure handling", INTEL CORPORATION, published on 29 September 2017 (2017-09-29), XP051355048 discloses that every IP failure of the SRB3 (RRC signalling to eNB, e.g. SN) should be reported to the network. IP failure is reported to MN (master node) using SCG (Secondary Cell Group) failure indication, wherein NR RRC SN failure message is carried over SRB1 (RRC signalling to MN) transparently to MN. MN provides this indication to SN (Secondary node) over Xn. Network can differentiate the cause of the IP failure and e.g. state that a fraud base station is present.

### SUMMARY

The present invention is defined by the subject matter of the independent claims. Preferred embodiments are defined by the dependent claims.

### BRIEF DESCRIPTION OF THE DRAWINGS

Figure 1 is a high-level block diagram of an exemplary architecture of the Long-Term Evolution (LTE) Evolved UTRAN (E-UTRAN) and Evolved Packet Core (EPC) network, as standardized by 3GPP.
Figure 2A is a high-level block diagram of an exemplary E-UTRAN architecture in terms of its constituent components, protocols, and interfaces.
Figure 2B is a block diagram of exemplary protocol layers of the control-plane portion of the radio (Uu) interface between a user equipment (UE) and the E-UTRAN.
Figure 2C is a block diagram of an exemplary LTE radio interface protocol architecture from the perspective of the PHY layer.
Figure 3 is a block diagrams of an exemplary downlink (DL) LTE radio frame structures used for frequency division duplexing (FDD) operation.
Figure 4 shows an exemplary ASN.1 data structure used to define a *VarConnEstFailReport* sent by a user equipment (UE) in LTE.
Figure 5 shows a block diagram of an exemplary 5G logical network architecture.
Figure 6 shows a block diagram of the integrity algorithms used in to protect and authenticate messages in the 5GC, as further defined in 3GPP TS 33.501 (v15.2.0).
Figure 7 shows NR RRC states and procedures by which a UE transitions between the NR RRC states.
Figure 8 is a flow diagram illustrating an exemplary Suspend procedure used to transition a UE from RRC_CONNECTED state to RRC_INACTIVE state.
Figure 9 is a flow diagram illustrating an exemplary Resume procedure used to transition a UE from RRC_INACTIVE back to RRC_CONNECTED.
Figures 10A-E show signal flow diagrams corresponding to various messages that can be transmitted in response to the *RRCResumeRequest* message.
Figures 11A-B show signal flow diagrams corresponding to various messages exchanged during an LTE connection re-establishment procedure.
Figure 12 shows a signal flow diagram for an exemplary NR connection re-establishment procedure.
Figures 13-14 show exemplary ASN.1 data structures for information that a UE can obtain, log, and provide to a network in a resume or re-establishment failure report, according to various exemplary embodiments of the present disclosure.
Figure 15 is a flow diagram illustrating an inventive method and/or procedure performed by a UE.
Figure 16 is a flow diagram illustrating an inventive method and/or procedure performed by a network node (e.g., base station, gNB, eNB, etc. or component thereof).
Figure 17 illustrates an exemplary wireless network.
Figure 18 illustrates an exemplary UE.
Figure 19 is a block diagram illustrating an exemplary virtualization environment
Figures 20-21 are block diagrams of various exemplary communication systems and/or networks.
Figures 22-25 are flow diagrams illustrating various exemplary methods and/or procedures implemented in a communication system.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art. Furthermore, the following terms are used throughout the description given below:
- **Radio Node:** As used herein, a "radio node" can be either a "radio access node" or a "wireless device."
- **Radio Access Node:** As used herein, a "radio access node" (or "radio network node") can be any node in a radio access network (RAN) of a cellular communications network that operates to wirelessly transmit and/or receive signals. Some examples of a radio access node include, but are not limited to, a base station (*e.g.,* a New Radio (NR) base station (gNB) in a 3GPP Fifth Generation (5G) NR network or an enhanced or evolved Node B (eNB) in a 3GPP LTE network), a high-power or macro base station, a low-power base station (*e.g.,* a micro base station, a pico base station, a home eNB, or the like), an integrated access backhaul (IAB) node, and a relay node.
- **Core Network Node:** As used herein, a "core network node" is any type of node in a core network. Some examples of a core network node include, *e.g.,* a Mobility Management Entity (MME), a Packet Data Network Gateway (P-GW), a Service Capability Exposure Function (SCEF), or the like.
- **Wireless Device:** As used herein, a "wireless device" (or "WD" for short) is any type of device that has access to (*i.e.,* is served by) a cellular communications network by communicate wirelessly with network nodes and/or other wireless devices. Unless otherwise noted, the term "wireless device" is used interchangeably herein with "user equipment" (or "UE" for short). Some examples of a wireless device include, but are not limited to, a UE in a 3GPP network and a Machine Type Communication (MTC) device. Communicating wirelessly can involve transmitting and/or receiving wireless signals using electromagnetic waves, radio waves, infrared waves, and/or other types of signals suitable for conveying information through air.
- Network Node: As used herein, a "network node" is any node that is either part of the radio access network or the core network of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (*e.g*., administration) in the cellular communications network.

Note that the description given herein focuses on a 3GPP cellular communications system and, as such, 3GPP terminology or terminology similar to 3GPP terminology is oftentimes used. However, the concepts disclosed herein are not limited to a 3GPP system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from the concepts, principles, and/or embodiments described herein.

In addition, functions and/or operations described herein as being performed by a wireless device or a network node may be distributed over a plurality of wireless devices and/or network nodes. Furthermore, although the term "cell" is used herein, it should be understood that (particularly with respect to 5G NR) beams may be used instead of cells and, as such, concepts described herein apply equally to both cells and beams.

As briefly mentioned above, there are various problems and/or issues related to a UE transitioning from RRC_INACTIVE to RRC_CONNECTED state in NR, which is based on a "Resume" procedure. For example, a UE's Resume procedure can fail for various reasons, and it can be quite difficult for the network to determine what caused the failure and, consequently, any remedial actions required. These issues are discussed in more detail below.

In LTE, when a UE sets up a connection from IDLE state or resumes a suspended connection (e.g., upon sending *RRCConnectionRequest* or *RRCConnectionResume-Request*)*,* it starts a timer T300. If this timer expires before the connection is setup or resumed, a framework exists for reporting a connection establishment failure. This is illustrated by the exemplary procedural statements below, taken in relevant part from 3GPP TS 36.331 (v15.3.0) section 5.3.3.6.

### ^{∗∗∗} Begin excerpt from 3GPP TS 36.331 ^{∗∗∗}

### 5.3.3.6 T300 expiry

The UE shall:
1>if timer T300 expires:
   2> except for NB-IoT, store the following connection establishment failure information in the *VarConnEstFailReport* by setting its fields as follows:
   3> clear the information included in *VarConnEstFailReport,* if any;
   3> set the *plmn-Identity* to the PLMN selected by upper layers (see TS 23.122 [11], TS 24.301 [35]) from the PLMN(s) included in the *plmn-IdentityList* in *SystemInformationBlockType1;*
   3> set the *failedCellId* to the global cell identity of the cell where connection establishment failure is detected;
   3> set the *measResultFailedCell* to include the RSRP and RSRQ, if available, of the cell where connection establishment failure is detected and based on measurements collected up to the moment the UE detected the failure;
   3>if available, set the *measResultNeighCells,* in order of decreasing ranking-criterion as used for cell re-selection, to include neighbouring cell measurements for at most the following number of neighbouring cells: 6 intra-frequency and 3 inter-frequency neighbours per frequency as well as 3 inter-RAT neighbours, per frequency/ set of frequencies (GERAN) per RAT and according to the following:
      4> for each neighbour cell included, include the optional fields that are available;
      NOTE 2:The UE includes the latest results of the available measurements as used for cell reselection evaluation, which are performed in accordance with the performance requirements as specified in TS 36.133 [16].
   3>if available, set the *logMeasResultListWLAN* to include the WLAN measurement results, in order of decreasing RSSI for WLAN APs;
   3>if available, set the *logMeasResultListBT* to include the Bluetooth measurement results, in order of decreasing RSSI for Bluetooth beacons;
   3>if detailed location information is available, set the content of the *locationInfo* as follows:
      4> include the *locationCoordinates;*
      4> include the *horizontalVelocity,* if available;
   3> set the *numberOfPreamblesSent* to indicate the number of preambles sent by MAC for the failed random access procedure;
   3> set *contentionDetected* to indicate whether contention resolution was not successful as specified in TS 36.321 [6] for at least one of the transmitted preambles for the failed random access procedure;
   3> set *maxTxPowerReached* to indicate whether or not the maximum power level was used for the last transmitted preamble, see TS 36.321 [6];

The UE may discard the connection establishment failure information, i.e., release the UE variable *VarConnEstFailReport,* 48 hours after the failure is detected, upon power off, or upon detach.

### ^{∗∗∗} End excerpt from 3GPP TS 36.331 ^{∗∗∗}

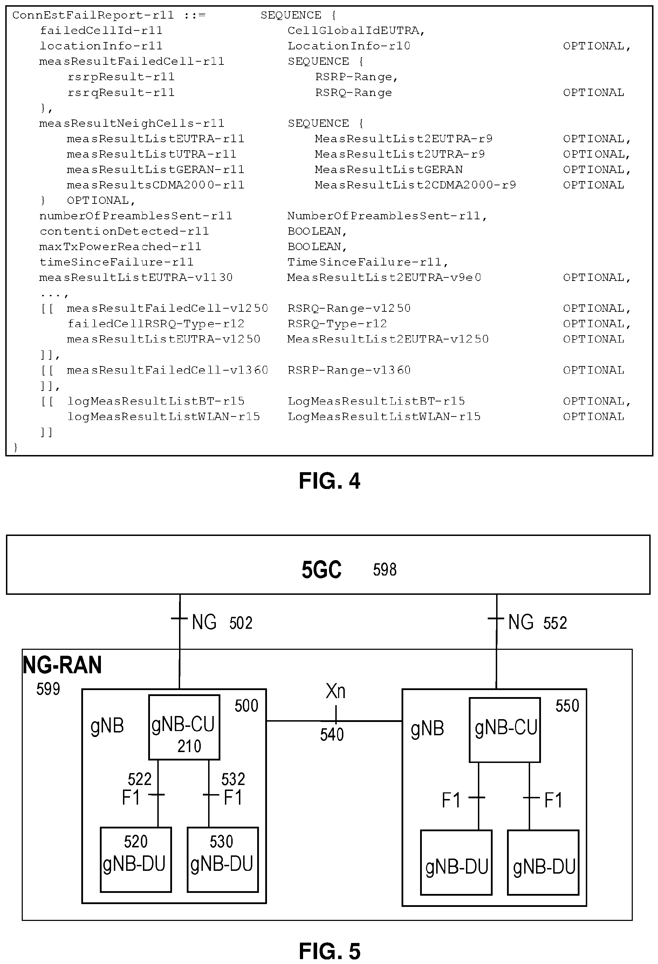

Figure 4 shows an exemplary ASN.1 data structure used to define *VarConnEstFailReport.*

When the UE gets connected again from IDLE (e.g., it sends an *RRCConnectionRequest* and receives an *RRCConnectionSetup* message), it can send an indication (called *connEstFailInfoAvailable*) that it has a connection establishment failure report in the *RRCConnectionSetupComplete* message, as shown in the procedure below taken in relevant part from 3GPP TS 36.331 section 5.3.3.4:

### ^{∗∗∗} Begin excerpt from 3GPP TS 36.331 ^{∗∗∗}

### 5.3.3.4 Reception of the RRCConnectionSetup by the UE

The UE shall:
1> set the content of *RRCConnectionSetupComplete* message as follows:
3>if the UE has connection establishment failure information available in *VarConnEstFailReport* and if the RPLMN is equal to *plmn-Identity* stored in *VarConnEstFailReport:*
4> include *connEstFailInfoAvailable;*

### ^{∗∗∗} End excerpt from 3GPP TS 36.331 ^{∗∗∗}

Similarly, the UE can also include *connEstFailInfoAvailable* in a *RRCConnectionReconfigurationComplete* message. The eNB can also send a *UEInformationRequest* message to the UE to get this report. This procedure defined in 3GPP TS 36.331 section 5.6.5.3 is shown in relevant part below:

### ^{∗∗∗} Begin excerpt from 3GPP TS 36.331 ^{∗∗∗}

### 5.6.5.3 Reception of the UEInformationRequest message

Upon receiving the *UEInformationRequest* message, the UE shall, only after successful security activation:
1>if *connEstFailReportReq* is set to *true* and the UE has connection establishment failure information in *VarConnEstFailReport* and if the RPLMN is equal to *plmn-Identity* stored in *VarConnEstFailReport:*
   2> set *timeSinceFailure* in *VarConnEstFailReport* to the time that elapsed since the last connection establishment failure in E-UTRA;
   2> set the *connEstFailReport* in the *UEInformationResponse* message to the value of *connEstFailReport* in *VarConnEstFailReport;*
   2> discard the *connEstFailReport* from *VarConnEstFailReport* upon successful delivery of the *UEInformationResponse* message confirmed by lower layers;
1> if the *logMeasReport* is included in the *UEInformationResponse:*
   2> submit the *UEInformationResponse* message to lower layers for transmission via SRB2;
   2> discard the logged measurement entries included in the *logMeasInfoList* from *VarLogMeasReport* upon successful delivery of the *UEInformationResponse* message confirmed by lower layers;
1>else:
   2> submit the *UEInformationResponse* message to lower layers for transmission via SRB1;

### ^{∗∗∗} End excerpt from 3GPP TS 36.331 ^{∗∗∗}

In this manner, the LTE UE can provide the network with information concerning the cause of a connection establishment failure (i.e., in *VarConnEstFailReport*) when setting up a connection from IDLE state or resuming a suspended connection. However, resume failure reports do not exist in NR. This is discussed in more detail after the following description of 5G network functionality.

Figure 5 illustrates a high-level view of an exemplary 5G network architecture, including a Next Generation RAN (NG-RAN) 599 and a 5G Core (5GC) 598. NG-RAN 599 can include one or more gNodeB's (gNBs) connected to the 5GC via one or more NG interfaces, such as gNBs 500, 550 connected via interfaces 502, 552, respectively. More specifically, gNBs 500, 550 can be connected to one or more Access and Mobility Management Functions (AMF) in the 5GC 598 via respective NG-C interfaces. Similarly, gNBs 500, 550 can be connected to one or more User Plane Functions (UPFs) in 5GC 598 via respective NG-U interfaces.

Although not shown, in some deployments 5GC 598 can be replaced by an Evolved Packet Core (EPC), which conventionally has been used together with LTE E-UTRAN. In such deployments, gNBs 500, 550 can connect to one or more Mobility Management Entities (MMEs) in EPC 598 via respective S1-C interfaces. Similarly, gNBs 500, 550 can connect to one or more Serving Gateways (SGWs) in EPC via respective NG-U interfaces.

In addition, the gNBs can be connected to each other via one or more Xn interfaces, such as Xn interface 540 between gNBs 500 and 550. The radio technology for the NG-RAN is often referred to as "New Radio" (NR). With respect to the NR interface to UEs, each of the gNBs can support frequency division duplexing (FDD), time division duplexing (TDD), or a combination thereof.

NG-RAN 599 is layered into a Radio Network Layer (RNL) and a Transport Network Layer (TNL). The NG-RAN architecture, *i.e.,* the NG-RAN logical nodes and interfaces between them, is defined as part of the RNL. For each NG-RAN interface (NG, Xn, F1) the related TNL protocol and the functionality are specified. The TNL provides services for user plane transport and signaling transport. In some exemplary configurations, each gNB is connected to all 5GC nodes within an "AMF Region" which is defined in 3GPP TS 23.501. If security protection for CP and UP data on TNL of NG-RAN interfaces is supported, NDS/IP (3GPP TS 33.401) shall be applied.

The NG RAN logical nodes shown in Figure 5 (and described in 3GPP TS 38.401 and 3GPP TR 38.801) include a Central Unit (CU or gNB-CU) and one or more Distributed Units (DU or gNB-DU). For example, gNB 500 includes gNB-CU 510 and gNB-DUs 520 and 530. CUs (e.g., gNB-CU 510) are logical nodes that host higher-layer protocols and perform various gNB functions such controlling the operation of DUs. A DU (e.g., gNB-DUs 520, 530) is a decentralized logical node that hosts lower layer protocols and can include, depending on the functional split option, various subsets of the gNB functions. As such, each of the CUs and DUs can include various circuitry needed to perform their respective functions, including processing circuitry, transceiver circuitry (e.g., for communication), and power supply circuitry. Moreover, the terms "central unit" and "centralized unit" are used interchangeably herein, as are the terms "distributed unit" and "decentralized unit."

A gNB-CU connects to one or more gNB-DUs over respective F1 logical interfaces, such as interfaces 522 and 532 shown in Figure 5. However, a gNB-DU can be connected to only a single gNB-CU. The gNB-CU and connected gNB-DU(s) are only visible to other gNBs and the 5GC as a gNB. In other words, the F1 interface is not visible beyond gNB-CU. Furthermore, the F1 interface between the gNB-CU and gNB-DU is specified and/or based on the following general principles:
- F1 is an open interface;
- F1 supports the exchange of signaling information between respective endpoints, as well as data transmission to the respective endpoints;
- from a logical standpoint, F1 is a point-to-point interface between the endpoints (even in the absence of a physical direct connection between the endpoints);
- F1 supports control plane (CP) and user plane (UP) separation, such that a gNB-CU may be separated in CP and UP;
- F1 separates Radio Network Layer (RNL) and Transport Network Layer (TNL);
- F1 enables exchange of UE- and non-UE-associated information;
- F1 is defined to be future proof with respect to new requirements, services, and functions;
- A gNB terminates X2, Xn, NG and S1-U interfaces and, for the F1 interface between DU and CU, utilizes the F1 application part protocol (F1-AP) which is defined in 3GPP TS 38.473.

Furthermore, a CU can host protocols such as RRC and PDCP, while a DU can host protocols such as RLC, MAC and PHY. Other variants of protocol distributions between CU and DU can exist, however, such as hosting the RRC, PDCP and part of the RLC protocol in the CU (*e.g*., Automatic Retransmission Request (ARQ) function), while hosting the remaining parts of the RLC protocol in the DU, together with MAC and PHY. In some exemplary embodiments, the CU can host RRC and PDCP, where PDCP is assumed to handle both UP traffic and CP traffic. Nevertheless, other exemplary embodiments may utilize other protocol splits that by hosting certain protocols in the CU and certain others in the DU. Exemplary embodiments can also locate centralized CP protocols (*e.g*., PDCP-C and RRC) in a different CU with respect to the centralized UP protocols (*e.g*., PDCP-U).

It has also been agreed in 3GPP to support a separation of gNB-CU into a CU-CP function (including RRC and PDCP for signaling radio bearers) and CU-UP function (including PDCP for user plane). The CU-CP and CU-UP functions can communicate with each other using the E1-AP protocol over the E1 interface. In addition to the new E1 interface, the F1 interface can be logically separated into CP (F1-C) and UP (F1-U) functionalities. The following scenarios for the split CU-UP/CP are defined in 3GPP TR 38.804:
- CU-CP and CU-UP centralized;
- CU-CP distributed and CU-UP centralized; and
- CU-CP centralized and CU-UP distributed.

Similar to LTE, the NR PHY uses CP-OFDM (Cyclic Prefix Orthogonal Frequency Division Multiplexing) in the DL and both CP-OFDM and DFT-spread OFDM (DFT-S-OFDM) in the UL. In the time domain, NR DL and UL physical resources are organized into equally-sized subframes of 1ms each. A subframe is further divided into multiple slots of equal duration, with each slot including multiple OFDM-based symbols. An NR slot can include 14 OFDM symbols with normal cyclic prefix, or 12 OFDM symbols with extended cyclic prefix.

In both LTE and NR, integrity protection of messages is performed in the PDCP layer in both the network and the UE by computing a Message Authentication Code - Integrity (MAC-I), which is included in the PDCP header. The MAC-I is a secure checksum calculated using an integrity protection algorithm. When the receiver receives the PDCP packet it computes and verifies the MAC-I using the same inputs and algorithms as the transmitter so that each side can be authenticated. The MAC-I derivations are specified in 3GPP TS 33.401 (v15.5.0) and 3GPP TS 33.501 (v15.2.0) for EPC and 5GC, respectively, although the only difference is which algorithms are applied. For LTE E-UTRAN connected to either EPC or 5GC, the algorithms are defined in 33.401, while for NG-RAN, the algorithms sed defined in 33.501. Unlike the MAC-I, which is included at and verified by the PDCP layer, the security token is included and verified at the RRC layer.

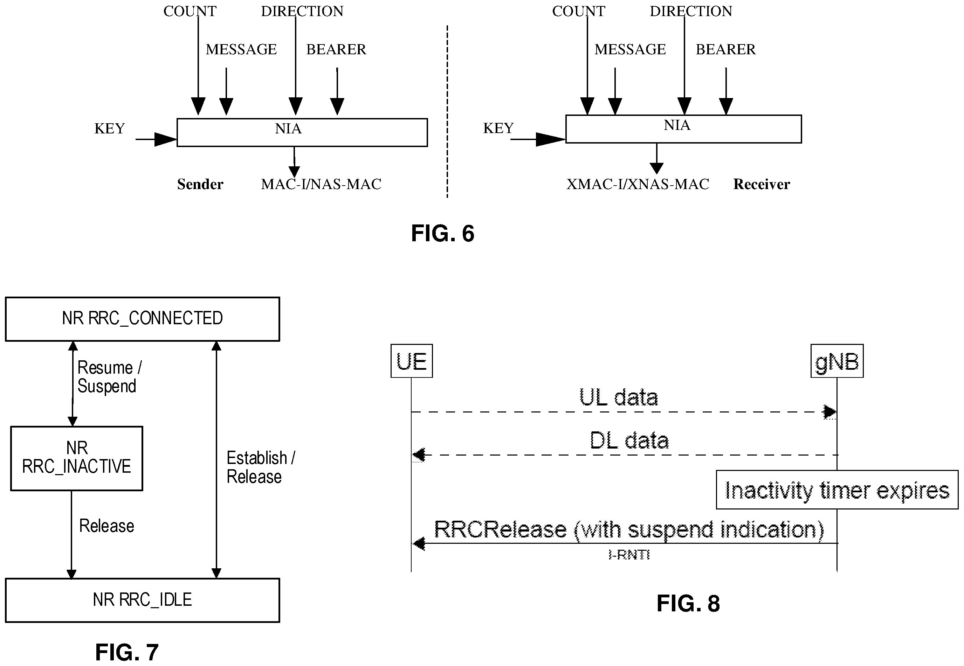

Figure 6 shows a block diagram of the integrity algorithms used in to protect and authenticate messages in 5GC, as further defined in 33.501. The input parameters to the integrity algorithm are a 128-bit integrity key named KEY, a 32-bit COUNT, a 5-bit bearer identity called BEARER, the 1-bit direction of the transmission (DIRECTION), and the message itself (MESSAGE). The DIRECTION bit is 0 for UL and 1 for DL. The bit length of the MESSAGE is LENGTH. Based on these input parameters the sender computes a 32-bit message authentication code (MAC-I/NAS-MAC) using the integrity algorithm NIA. The message authentication code is then appended to the message when sent. For integrity protection algorithms, the receiver computes the expected message authentication code (XMAC-I/XNAS-MAC) on the message received in the same way as the sender computed its message authentication code on the message sent and verifies the data integrity of the message by comparing it to the received message authentication code, i.e., MAC-I/NAS-MAC.

As part of the 3GPP standardized work on 5G, it has been decided that NR should support an RRC_INACTIVE state with similar properties as the suspended state in LTE Rel-13. The RRC_INACTIVE state has slightly different properties in that it is a separate RRC state and not part of RRC_IDLE as in LTE. Additionally, the CN/RAN connection (NG or N2 interface) is kept alive during RRC_INACTIVE while it was suspended in LTE.

Figure 7 shows NR RRC states and procedures by which a UE transitions between the NR RRC states. The properties of the states shown in Figure 7 are summarized as follows:
- RRC_IDLE:
   - A UE specific DRX may be configured by upper layers;
   - UE controlled mobility based on network configuration;
   - The UE:
      ∘ Monitors a Paging channel for CN paging using 5G-S-TMSI;
      ∘ Performs neighbor cell measurements and cell (re-)selection; and
      ∘ Acquires system information.
- RRC_INACTIVE:
   - A UE specific DRX may be configured by upper layers or by RRC layer;
   - UE controlled mobility based on network configuration;
   - The UE stores the AS context;
   - The UE:
      ∘ Monitors a Paging channel for CN paging using 5G-S-TMSI and RAN paging using I-RNTI;
      ∘ Performs neighbor cell measurements and cell (re-)selection;
      ∘ Performs RAN-based notification area updates periodically and when moving outside the RAN-based notification area;
      ∘ Acquires system information.
- RRC_CONNECTED:
   - The UE stores the AS context.
   - Transfer of unicast data to/from UE.
   - At lower layers, the UE may be configured with a UE specific DRX.;
   - For UEs supporting CA, use of one or more SCells, aggregated with the SpCell, for increased bandwidth;
   - For UEs supporting DC, use of one SCG, aggregated with the MCG, for increased bandwidth;
   - Network controlled mobility, *i.e.* handover within NR and to/from E-UTRAN.
   - The UE:
      ∘ Monitors a Paging channel;
      ∘ Monitors control channels associated with the shared data channel to determine if data is scheduled for it;
      ∘ Provides channel quality and feedback information;
      ∘ Performs neighbor cell measurements and measurement reporting;
      ∘ Acquires system information.

As shown in Figure 7, the transitions between RRC_INACTIVE and RRC_CONNECTED states are realized by two new procedures: "Suspend" (also called RRC connection release with SuspendConfig) and "Resume." Figure 8 is a flow diagram illustrating an exemplary Suspend procedure used to transition a UE from RRC_CONNECTED state to RRC_INACTIVE state. As shown in Figure 8, the gNB can suspend a connection and move the UE from RRC_CONNECTED to RRC_INACTIVE by sending the UE an *RRCRelease* message with suspend indication (or configuration). This can happen, for example, after the UE has been inactive for a certain period, causing a gNB internal inactivity timer to expire. Upon moving RRC_INACTIVE, both the UE and gNB store the UE's access stratum (AS) context and the associated identifier (referred to as I-RNTI). It has been recently updated that two identifiers will be configured in the suspend configuration: a long I-RNTI and a short I-RNTI. Which one the UE uses upon resume depends on an indication from the network, broadcast in system information of the cell in which the UE attempts to resume. The two I-RNTI identifiers were introduced to support scenarios when the UE resumes in a cell that only provides the UE with a small scheduling grant for sending the first UL message. Two different resume messages have also been introduced to address this scenario, namely *RRCResumeRequest* and *RRCResumeRequestl.* Even so, as used herein, *"RRCResume Request"* refers to both messages.

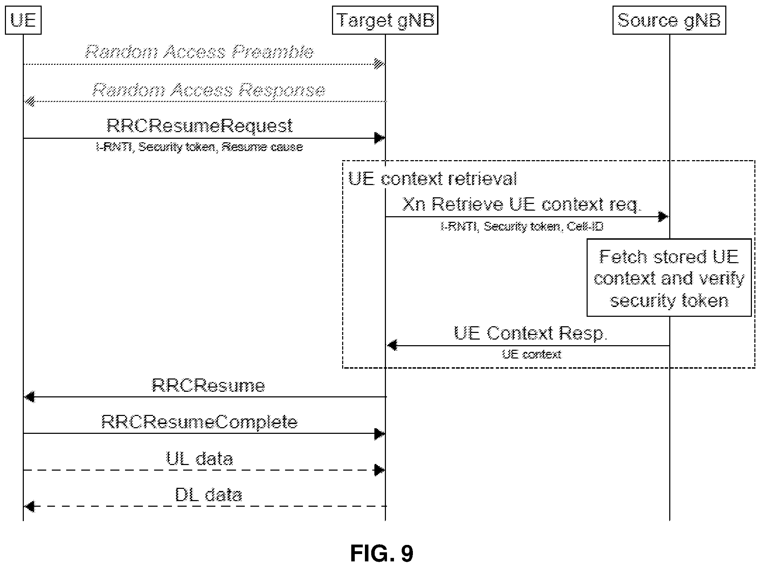

Figure 9 is a flow diagram illustrating an exemplary Resume procedure used to transition a UE from RRC_INACTIVE back to RRC_CONNECTED. As shown in Figure 9, the UE can attempt to resume the connection toward a particular gNB (e.g., same or different cell from which the connection was suspended) by sending the gNB an *RRCResumeRequest* message including the following: either the short or long I-RNTI, depending on the cell's indication; a security token (called *resumeMAC-I*) used to identify and verify the UE at RRC connection resume; and an indication of the resume cause (e.g., mobile originated data).

The gNB serving the cell in which the UE attempts to resume is often referred to as "target gNB," while the gNB serving the cell in which the UE was suspended is often referred to as the "source gNB." To resume the connection, the target gNB identifies the source gNB (e.g., from a portion of the I-RNTI) and requests that gNB to send the UE's context. In this request, the target gNB provides, among other things, a target cell ID, a UE ID, and security token received from the UE. As explained in more detail below, the source gNB locates the UE context based on the I-RNTI and verifies the request based on the security token. If successful, the source gNB forwards the UE context to the target gNB, which then responds to the UE with an *RRCResume* message to confirm that the connection is being resumed. The *RRCResume* message may also contain reconfigurations for the radio bearers being resumed. The UE acknowledges the reception of the *RRCResume* by sending *RRCResumeComplete* message, after which UL and/or DL data can be exchanged between the target gNB and the UE.

The NR resume procedure shown in Figure 9 is similar in some ways to the corresponding resume procedure in LTE and eLTE (e.g., E-UTRAN connected to 5GC). In NR and in eLTE, the *RRCResume* message is encrypted and integrity protected. That is done using new security keys, derived based on the stored AS security context. This new key derivation (e.g., a key update) is done as part of the resume procedure, in preparation for transmission of the *RRCResume* message. However, other messages than *RRCResume* can be sent in response to the *RRCResumeRequest* message. More generally, in both NR and eLTE, after the UE sends an *RRCResumeRequest* message, any of the following responsive messages from the target gNB on SRB1 should be encrypted and integrity protected:
- *RRCRelease* with suspend configuration moving the UE to RRC_INACTIVE;
- *RRCRelease* without suspend configuration moving the UE to RRC_IDLE; and
- *RRCResume* moving the UE to RRC_CONNECTED.

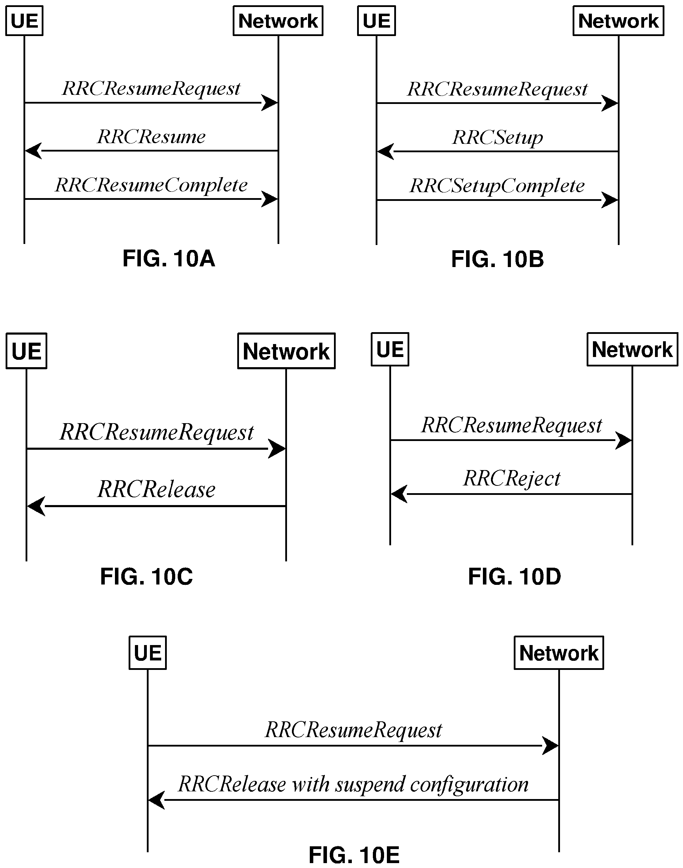

In addition, the target gNB can transmit other responsive messages on SRB0 without encryption or integrity protection. These include RRCReject with wait timer and RRCSetup (e.g., indicating fallback to RRC_IDLE). Figures 10A-E show signal flow diagrams corresponding to each of these messages that can be transmitted in response to the *RRCResumeRequest* message.

After receiving one of the messages transmitted on SRB1 with encryption and integrity protection, the UE must perform an integrity verification of the target gNB based on the received information. For example, this verification can be useful to prevent the UE from resuming the connection on a fake base station. Even so, an integrity verification can fail for many different reasons, and currently there are no means for the UE to distinguish between and/or report such failures such that the network can perform a remedial action.

More specifically, integrity verification failure (also referred to herein as "integrity protection failure" or "IP failure") can be due to many reasons including but not limited to: problems in the security configuration given to the UE by the source gNB upon suspension; problems in security configuration used by the target gNB upon resume; UE trying to resume in a fake base station; and corrupted packets carrying the *RRCResume* message (e.g., due to a coverage problem). The following excerpt from 3GPP TS 38.331 section 5.3.13 illustrates the RRC connection resume procedure, including handling of security issues.

### ^{∗∗∗} Begin excerpt from 3GPP TS 38.331 ^{∗∗∗}

### 5.3.13 RRC connection resume

### 5.3.13.2 Initiation

The UE initiates the procedure when upper layers or AS (when responding to NG-RAN paging or upon triggering RNA updates while the UE is in RRC_INACTIVE) requests the resume of a suspended RRC connection.

Upon initiation of the procedure, the UE shall:
1> start timer T319;
1> stop timer T380, if running;
1> initiate transmission of the *RRCResumeRequest* message or *RRCResumeRequestl* in accordance with 5.3.13.3.

### 5.3.13.3 Actions related to transmission of RRCResumeRequest or RRCResumeRequest1 message

The UE shall set the contents of *RRCResumeRequest* or *RRCResumeRequestl* message as follows:
1>restore the RRC configuration and security context from the stored UE AS context except the *cellGroupConfig;*
1> update the K_{gNB} key based on the current K_{gNB} or the NH, using the stored *nextHopChainingCount* value, as specified in TS 33.501 [11];
1>derive the K_{RRCenc} key, the K_{RRCint}, the K_{UPint} key and the K_{UPenc} key;
1> configure lower layers to apply integrity protection for all radio bearers except SRB0 using the previously configured algorithm and the K_{RRCint} key and K_{UPint} key immediately, i.e., integrity protection shall be applied to all subsequent messages received and sent by the UE;
NOTE 1: Only DRBs with previously configured UP integrity protection shall resume integrity protection.
1> configure lower layers to apply ciphering for all radio bearers except SRB0 and to apply the previously configured ciphering algorithm, the K_{RRCenc} key and the K_{UPenc} key, i.e. the ciphering configuration shall be applied to all subsequent messages received and sent by the UE;
1>restore the PDCP state and re-establish PDCP entities for SRB1;
1>resume SRB1;
1> submit the selected message *RRCResumeRequest* or *RRCResumeRequestl* for transmission to lower layers.
   NOTE 2: Only DRBs with previously configured UP ciphering shall resume ciphering.

If lower layers indicate an integrity check failure while T319 is running, perform actions specified in 5.3.13.5.

The UE shall continue cell re-selection related measurements as well as cell re-selection evaluation. If the conditions for cell re-selection are fulfilled, the UE shall perform cell re-selection as specified in 5.3.13.6.

### ^{∗∗∗} End excerpt from 3GPP TS 38.331 ^{∗∗∗}

Upon detecting an integrity protection failure or upon the expiry of timer T319, after the transmission of *RRCResumeRequest,* the UE enters RRC_IDLE and upper layers trigger NAS recovery, as illustrated by the relevant portions below from 3GPP TS 38.331.

### ^{∗∗∗} Begin excerpt from 3GPP TS 38.331 ^{∗∗∗}

### 5.3.13.5 T319 expiry or Integrity check failure from lower layers while T319 is running The UE shall:

1>if timer T319 expires or upon receiving Integrity check failure indication from lower layers while T319 is running:
2>perform the actions upon going to RRC_IDLE as specified in 5.3.11 with release cause 'RRC Resume failure'.

### ^{∗∗∗} End excerpt from 3GPP TS 38.331 ^{∗∗∗}

To summarize, the UE actions upon declaring the failure are basically a transition from RRC_INACTIVE to RRC_IDLE, an indication to NAS, and, based on that, triggering of a NAS recovery procedure (e.g., registration update procedure with NAS transition from 5GMM-CONNECTED with inactive indication to 5GMM-IDLE). Subsequently, on the AS level, the UE can initiate a connection setup / request for transition from RRC_IDLE to RRC_CONNECTED.

However, resume failure reports do not exist in NR. As the UE connects again from RRC_IDLE - possibly in another cell and/or frequency and/or RAT - it can be quite difficult for the network to know what caused the failure and, consequently, to determine any remedial actions required. In some cases, the same failure can occur to many or all UEs in the same area, indicating a serious condition that the network would like to prevent from happening again.

In LTE, as described above, a solution exists to report connection establishment/resume failure due the expiry of T300. Similar to NR, however, there is no failure reporting when resume fails due to an IP failure. Integrity protection is included in certain network messages to allow the UE to verify the message is from a real network (or node), i.e., an authenticated network (or node). For example, if the UE tries to resume in a cell associated with a fake base station (e.g., a malicious node trying to infiltrate the network), any integrity protected response message does not pass the integrity verification. However, this is not the only possible cause of an integrity protection failure, since malfunctions of the source node, target node, and/or UE can also lead to an IP failure.

Similar problems can exist in relation to re-establishment of an RRC connection. This procedure is formally named "RRC Connection Re-establishment" and "RRC Re-establishment" in LTE and NR, respectively, but unless otherwise noted, "connection re-establishment" will be used to refer to either or both of these procedures.

Connection re-establishment involves the resumption of SRB1 operation between a UE and the E-UTRAN and the re-activation of security, without changing algorithms. Trigger conditions for connection re-establishment can include radio link failure, handover failure, failure of mobility from E-UTRAN, integrity check failure, and failure of an RRC connection reconfiguration procedure. Even if one of these triggers occurs, the UE only initiates connection re-establishment if AS security has been activated. Connection re-establishment succeeds only if the concerned cell has a valid UE context. In case the E-UTRAN accepts the re-establishment, SRB 1 operation resumes while the operation of other radio bearers remains suspended. If AS security has not been activated, the UE moves to RRC_IDLE state directly.

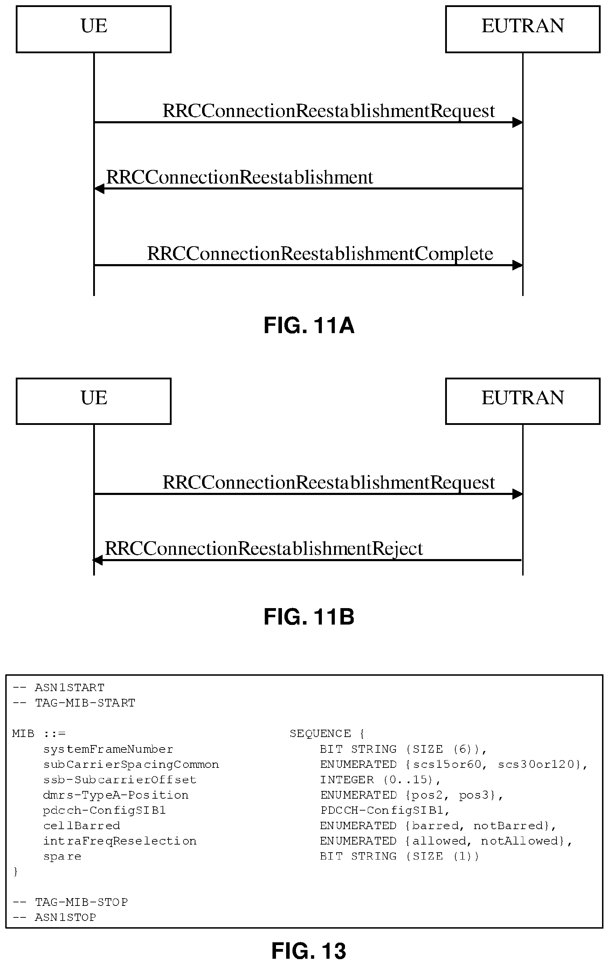

Figures 11A-B show signal flow diagrams for messages exchanged during an LTE connection re-establishment procedure. Upon the initiation of this procedure, the UE suspends all radio bearers except SRBO, on which it sends a *RRCConnectionReestablishmentRequest* message. At this state, the UE will either get back a *RRCConnectionReestablishment* or a *RRCConnectionReestablishmentReject* on SRB0. In the event that the UE gets back an *RRCConnectionReestablishment,* it will re-establish SRB 1 and send the *RRCConnectionReestablishmentComplete* on SRB1. According to 3GPP TS 36.331 (v15.3.0), the network is not allowed to start sending DL messages on SRB1 until it receives a *RRCConnectionReestablishmentComplete* message from the UE.

On the other hand, if the UE gets back an *RRCConnectionReestablishmentReject,* it will leave RRC_CONNECTED state and inform the NAS layer about RRC connection failure. This will trigger the NAS layer to perform recovery, which includes a new RRC connection setup. Note that all these response messages after the transmission of an *RRC Connection Reestablishment Request* are sent on SRBO, i.e., they are not encrypted and not integrity protected.

The LTE re-establishment procedure was revisited during the NR standardization and some agreements were reached on enhancements to speed up the failure recovery, e.g., in case of handover failures. Some of these enhancements include:
- ***RRCReestablishment on SRB1:*** There appears to be no fundamental reason why the UE could not re-establish PDCP for SRB1 and resume SRB1 in the DL before submitting MSG3 (of the random-access procedure) to lower layers. This would make it possible to use SRB1 for MSG4 instead of SRBO, which would in turn make it possible to send subsequent RRC reconfiguration message in conjunction with MSG4 or directly after instead of waiting for the UE response in MSG5. This would save a rountrip in the re-establishment of DRBs.
- ***RRCSetup in response to RRCReestablishmentRequest:*** It appears to be possible to support faster NAS recovery in the RAN in the case the RAN is not able to re-establish the UE context, e.g., a cell is not prepared during handover failure. This could be done by the network sending an RRC connection setup message on SRB0 (instead of a RRC re-establishment reject) which could be used to initiate normal RRC connection setup.
- ***RRCReestablishmentReject* was removed:** It appears that this message was not needed any longer, thanks to the fallback procedure. If the UE tries to re-establish in a cell that is not prepared or where the network cannot re-establish the data radio bearers (DRBs), the network can send an RRCSetup. And, in the scenario where the cell is overloaded, network may simply wait until the failure timer T301 expires, so that the UE would enter RRC_IDLE and would perform access control before trying again.

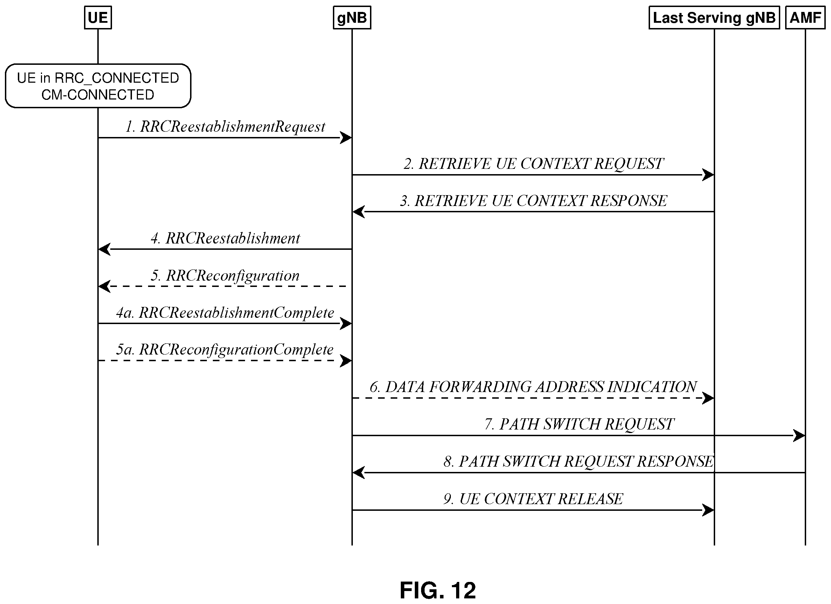

Figure 12 shows an exemplary connection re-establishment procedure for NR that includes the above enhancements. Various operations in Figure 12 have numerical labels. Unless specifically noted, however, these are not intended to convey a particular order for the operations, but rather to facilitate explanation of the procedure.

In operation 1, the UE re-establishes the connection, providing the UE Identity (PCI+C-RNTI) to the gNB where the trigger for the re-establishment occurred. In operation 2, if the UE Context is not locally available, the gNB requests the last serving gNB to provide UE Context data and, in operation 3, the last serving gNB provides UE context data. In operations 4 and 4a, the gNB continues the reestablishment of the RRC connection by exchanging messages with the UE on SRB1. Optionally, in operations 5 and 5a, the gNB may perform a reconfiguration to re-establish SRB2 and DRBs while the reestablishment procedure is ongoing.

If necessary to prevent loss of DL user data buffered in the last serving gNB, in operation 6, the gNB provides forwarding addresses to the last serving gNB. In operations 7 and 8, the gNB exchanges messages with the access management function (AMF) in 5GC to perform a path switch. In operation 9, the gNB triggers the release of the UE resources at the last serving gNB.

In contrast to LTE, the NR *RRCReestablishment* message (e.g., operation 4 in Figure 12) sent in response to an *RRCReestablishmentRequest* message (e.g., operation 1 in Figure 12) is integrity protected, so the network is able to multiplex the *RRCReconfiguration* message (e.g., operation 5 in Figure 12) together with it tin order to resume or re-establish the SRBs and/or DRBs. Due to this enhancement, however, an integrity verification failure can occur upon reception of a *RRCReestablishment* message, which is not present in LTE. This is illustrated by the following exceprt from 3GPP 38.331:

### ^{∗∗∗} Begin excerpt from 3GPP TS 38.331 ^{∗∗∗}

### 5.3.7.5 Reception of the RRCReestablishment by the UE

The UE shall:
1> stop timer T301;
1> consider the current cell to be the PCell;
1> store the *nextHopChainingCount* value indicated in the *RRCReestablishment* message;
1> update the K_{gNB} key based on the current K_{gNB} or the NH, using the stored *nextHopChainingCount* value, as specified in TS 33.501 [11];
1>derive the K_{RRCenc} key, the K_{RRCint}, the K_{UPint} key and the K_{UPenc} key associated with the previously configured ciphering algorithm, as specified in TS 33.501 [11];
1>request lower layers to verify the integrity protection of the *RRCReestablishment* message, using the previously configured algorithm and the K_{RRCint} key;
1>if the integrity protection check of the *RRCReestablishment* message fails:
   2>perform the actions upon going to RRC_IDLE as specified in 5.3.11, with release cause 'other', upon which the procedure ends;
1> configure lower layers to activate integrity protection using the previously configured algorithm and the KRRCint key immediately, i.e., integrity protection shall be applied to all subsequent messages received and sent by the UE, including the message used to indicate the successful completion of the procedure;
1> configure lower layers to apply ciphering using the previously configured algorithm, the K_{RRCenc} key and the K_{UPenc} key immediately, i.e., ciphering shall be applied to all subsequent messages received and sent by the UE, including the message used to indicate the successful completion of the procedure;
1> submit the *RRCReestablishmentComplete* message to lower layers for transmission;
1>the procedure ends.

### ^{∗∗∗} End excerpt from 3GPP TS 38.331 ^{∗∗∗}

If the UE selects a cell of a real base station to perform reestablishment, the procedure should continue normally, i.e., the integrity protection succeeds and the UE sends a complete message. However, if that is a fake base station and the UE has selected a cell from that fake base station, the UE will go to RRC_IDLE and upper layers will trigger NAS recovery, i.e., a registration area update. If that is a fake base station and the UE does not perform cell reselection to a real cell (from a real base station), the UE risks getting stuck and NAS specifications define that the UE finally performs cell selection to EUTRAN after a number of attempts. However, the fact that there is a fake base station or a base station with misfunctioning security solution (as integrity protection has failed) will be completely unknown to the network. Also, the fake base station may also now know a valid source PCI and C-RNTI, since these are sent in plain text as part of *RRCReestablishmentRequest* message.

In addition, upon the transmission of the *RRCReestablishmentRequest* message, the UE starts a failure detection timer T301. Then, if the selected cell has an UL problem and the network does not receive the message, or if the selected cell is able to detect the message but the UE is unable to detect the response (e.g., *RRCReestablishment*) due to DL problems, the timer T301 expires and a failure is declared. A failure is also declared if the selected cell is no longer suitable. This is illustrated by the following excerpt from 3GPP TS 38.331.

### ^{∗∗∗} Begin excerpt from 3GPP TS 38.331 ^{∗∗∗}

### 5.3.7.7 T301 expiry or selected cell no longer suitable

The UE shall:
1>if timer T301 expires; or
1>if the selected cell becomes no longer suitable according to the cell selection criteria as specified in TS 38.304 [21]:
   2>perform the actions upon going to RRC_IDLE as specified in 5.3.11, with release cause 'RRC connection failure'.

### ^{∗∗∗} End excerpt from 3GPP TS 38.331 ^{∗∗∗}

As described above, the UE declares a reestablishment failure in different cases. That may occur if the received *RRCReestablishment* message doesn't pass the integrity verification step, which can be due problem in the security configuration given to the UE by the source gNB upon a handover (or reconfiguration with Sync), a problem in security configuration used by the target gNB upon reestablishment, or the UE was trying to reestablish in a fake base station. Other problems may also occur such as the expiry of timer T301 of if the selected cell becomes no longer suitable, or, in the case of LTE when the UE receives an *RRCConnectionReestablishmentReject.*

The UE actions upon declaring the failure are basically a transition from RRC_CONNECTED to RRC_IDLE, an indication to Non-Access Stratum (NAS), and, based on that, the triggering of a NAS recovery procedure. In other words, a registration update procedure is triggered on NAS level, and a connection setup/request (transition from idle to connected) is triggered on AS level.

In NR and in LTE, re-establishment failure reports do not exist. As discussed above, the types of reestablishment failures can be quite diverse, e.g., UL coverage, DL coverage, security on source, security on target, fake base station, etc. As the UE connects again via RRC_IDLE, possibly in another cell and/or frequency and/or RAT, it is quite challenging for the network to know what triggered the re-establishment failure and what remedial actions are needed. This can be particularly problematic if the re-establishment failure is occurring for many or all UEs in the same area.

Accordingly, exemplary embodiments of the present disclosure provide a flexible solution for logging and reporting integrity protection (IP) failures during a resume or a re-establishment procedure, as well as for analyzing reported resume or re-establishment IP failures and triggering various actions with respect to the cell associated with the IP failures. For example, when the network receives logged information about the different resume or re-establishment failures, it can identify a particular type of IP failure, such as the presence of a fake base station or a failed security configuration.

In such a situation, a fake base station may provide a cell with a strong signal such that many UEs will camp under it (e.g., in idle mode). Since UEs camping on the fake cell cannot be paged by the real serving network, this can be used for a DoS (Denial of Service) attack on the real network in that particular area.

It is possible to mitigate DoS by configuring the UEs with a periodic RNA update, such that the UEs will try to resume periodically to send these updates, whereby failure of Integrity verification will lead to NAS recovery and probably redirection to another cell/frequency. However, periodic RNA update can be disabled by configuring a periodicity value of infinity and, even if it was configured, it can be set to a very large value to facilitate UE power consumption savings. In other words, setting periodic RNA updates to avoid DoS comes at a real cost to the UE and the network.

When a UE tries to resume, a fake base station can send a fake *RRCResume* message, or just decide not to respond, which results in timer T319 expiry in NR (or T300 expiry in LTE). In both cases, a UE resume failure would occur but in conventional solutions, a failure report is generated and possibly sent to the real network only in the second case when the UE succeeds to connect (assuming the handling of expiry of T319 is handled the same way as T300 where a connection failure report is sent). Hence, a fake base station has the motivation to respond with a fake response message (e.g., Resume or Release) to hide itself, and being able to log and report this scenario is quite important to identify such cases (e.g., for signaling/UE battery usage optimization).

Similarly, when a UE tries to re-establish a connection, a fake base station can send a fake *RRCReestablishment* message, or just decide not to respond, which results in timer T301 expiry in NR. In both cases, a UE re-establishment failure would occur but in conventional solutions, no failure information is logged and no failure report is generated or sent to the network.

In general, exemplary embodiments include procedures whereby when a UE detects a resume failure due to integrity verification failure, it compiles a resume failure report. When the UE later succeeds to connect to the network, it indicates to the network such a report is available. In conventional approaches, a connection failure report is generated only when the failure was due to a connection setup/resume timer expiration before the connection was setup/resumed.

If the resume or re-establishment failure report includes the I-RNTI, the network can locate the latest node and AS context of that UE, including the UE's security configuration (e.g., next hop chaining count, integrity protection and ciphering security algorithms, security keys, etc.). The resume or re-establishment failure report can also include information associated with the cell where the resume or re-establishment failure occurred, as well as information associated with subsequent actions taken by the UE from detection of the failure until it succeeds to connect to the real network. For example, if upon the failure the UE had performed cell selections and/or cell reselections before it succeeded to connect and sends the report, the UE can log information about these cells, how many times it tried to connect before it succeeds, etc.

Upon the reception of a failure report with an indication of the type of resume or re-establishment failure, the network can take various actions depending on the indicated failure cause value. For instance, if based on reception of various resume failure reports that indicate IP failure in a particular cell, the network could add the ID of this cell to the blacklisted cells transmitted in system information (e.g., SIB4, SIB5, SIB6 for intra-frequency, inter-frequency, and inter-RAT cells, respectively).

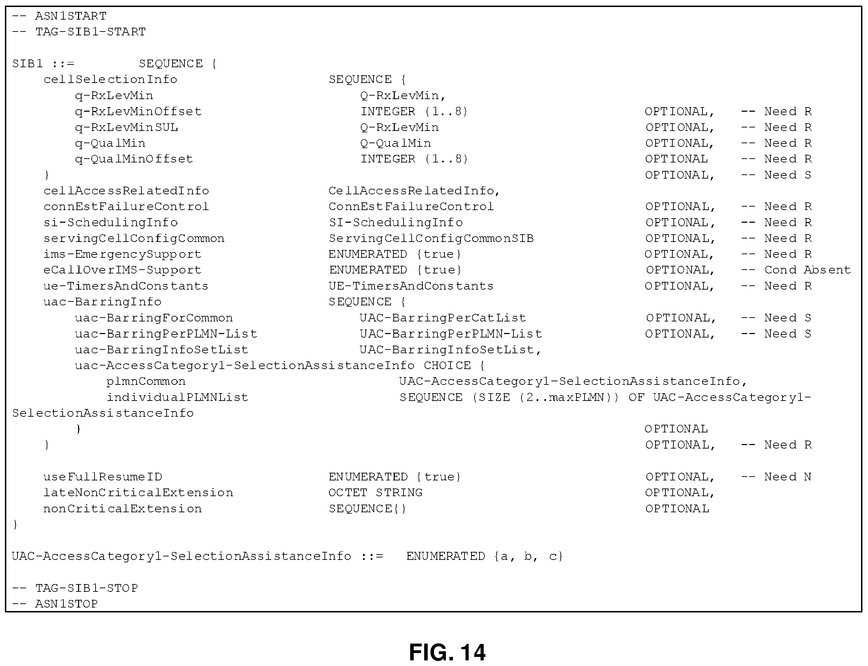

More specifically, upon detecting resume or re-establishment failure related to failed integrity verification and/or security, the UE can obtain information (e.g., information not yet stored at the UE) associated with the cell where the failure occurred, such as system information broadcast by the failing cell. Examples of information that may be obtained and logged are the master information block (MIB) and any system information blocks (e.g., SIB1, SIB2, etc.). Figures 13-14 show exemplary ASN.1 data structures for exemplary MIB and SIB information, respectively that a UE can obtain, log, and provide to the network in a resume or re-establishment failure report.

Upon receiving the MIB from the UE in the resume failure report, the network can determine whether a possibly fake base station is transmitting a SIB 1, which is not mandatory in NR. This can be determined based on the report of MIB parameters such as *ssb-SubcarrierOffset* and *pdcch-ConfigSIB1.* In some situations, real cells do not broadcast SIB 1, e.g., because they are in non-standalone operation or because these are non-cell defining SSBs. The parameter *intraFrequencyReselection* is also relevant since it may indicate which action the fake node wants the UE to take upon detecting a barred cell. Upon receiving the MIB from the UE in the resume failure report, the network can determine whether the cell is associated with a real base station or a fake base station. For example, the network can make this determination based on the *cellAccessRelatedInfo* that contains a list of cell identifiers per PLMN and a list of PLMNs.

In some embodiments, upon detecting an 'RRC resume failure' (or similar failure) related to failed integrity verification and/or security, the UE can obtain information and store information associated with the failed resume procedure, such as the resume cause value (e.g., as in *RRCResumeRequest* message), reason for the triggering (e.g., RNA update due to mobility, RAN update due to the expiry of timer T380, etc.), short MAC-I calculated based on the stored AS context, I-RNTI(s) (i.e., short and/or long), etc. Such information can be useful for the network to distinguish between the different types of failures caused by to IP and/or security failure.

For example, by the UE logging and reporting the I-RNTI or any other type of AS context identifier (e.g., a resume identifier) that helps identify the AS context location of the UE that experienced the failure, the network can locate the node that configured the UE with security parameters to be used during a resume or re-establishment procedure (e.g., suspend configuration containing the next hop chaining counter, security algorithms, previously used security keys, and any other information associated with the AS security context). In this manner, the network can detect problems associated with the UE's AS security context.

In other embodiments the resume or re-establishment failure report can include information related to the particular failure that is detected at the UE, which allows the network to distinguish between failures leading to the same or similar UE actions.

For example, various logged information related to resume failure(s) can be reported by the UE in a new UE variable called *VarConnResFailReport.* Similarly, various logged information related to re-establishment failure(s) can be reported by the UE in a new UE variable called *VarConnReestFailReport.* In some embodiments, rather than introducing a new variable or message (e.g., *VarConnResFailReport* or *VarConnReestFailReport*) to report failure handling, the existing *VarConnEstFailReport* (e.g., as illustrated by Figure 4) can also be used for resume or re-establishment failure reporting with modifications. For example, a flag or a cause value can be included in the message to distinguish between resume and establishment failures. Similarly, a flag or a cause value can be included in the message to distinguish between re-establishment and establishment failures. For resume or re-establishment failure reporting, the *VarConnEstFailReport* can be enhanced to include the additional information relevant for the cases of resume and/or re-establishment failure due to integrity protection, discussed herein.

For example, the handling of the expiry of timer T319 and IP failure while T319 is running is specified in 3GPP TS 38.331 section 5.3.13.5. Upon either of these failures, the UE goes to IDLE and indicates a resume failure to upper layers, whereby upper layers trigger NAS recovery and transition from 5GMM-CONNECTED inactive to 5GMM-IDLE. In such embodiments, the UE can also log and report whether the resume failure is due to expiry of timer T319 or IP failure while timer T319 is running, facilitating the network to distinguish between these two failure scenarios having the same UE actions.

Exemplary embodiments of the UE's logging and reporting of resume failure information can be specified and/or implemented according to the procedure shown below, which can be a replacement for current 3GPP TS 38.331 section 5.3.13.5.

### ^{∗∗∗} Begin proposed 3GPP TS 38.331 text ^{∗∗∗}

### 5.3.13.5 T319 expiry or Integrity check failure from lower layers while T319 is running The UE shall:

1>if timer T319 expires or upon receiving Integrity check failure indication from lower layers while T319 is running:
2> store the following resume failure information in the *VarConnResFailReport* by setting its fields as follows:
   3> clear the information included in *VarConnResFailReport,* if any;
   3> set the *plmn-Identity* to the PLMN selected by upper layers from the PLMN(s) included in the *SIB1;*
   3>if the failure is triggered due to integrity protection;
      4> set the *resumeCauseFailure* to *'ipFailure';*
      4> store other fields in *VarConnResFailReport* related to integrity protection failure;
   3> else, if the failure is triggered due to the expiry of timer T319;
      4> set the *resumeCauseFailure* to *'expiryt319';*
      4> store other fields in *VarConnResFailReport* related to the expiry of timer T319;
      3> set the *failedCellId* to the global cell identity of the cell where connection resume failure is detected;
      3> set the *measResultFailedCell* to include the RSRP and RSRQ, if available, of the cell where connection establishment failure is detected and based on measurements collected up to the moment the UE detected the failure;
      3>if available, set the *measResultNeighCells,* in order of decreasing ranking-criterion as used for cell re-selection, to include neighbouring cell measurements for at most the following number of neighbouring cells: 6 intra-frequency and 3 inter-frequency neighbours per frequency as well as 3 inter-RAT neighbours, per frequency/ set of frequencies per RAT and according to the following:
         4> for each neighbour cell included, include the optional fields that are available;
   3> store other fields as defined in *VarConnResFailReport;*
2> perform the actions upon going to RRC_IDLE as specified in 5.3.11 with release cause 'RRC Resume failure'.

### ^{∗∗∗} End proposed 3GPP TS 38.331 text ^{∗∗∗}

As another example, during re-establishment, the handling of the expiry of timer T301 and IP failure while T301 is running is specified in 3GPP TS 38.331 section 5.3.7.5. Upon either of these failures, the UE goes to IDLE and indicates a resume failure to upper layers, whereby upper layers trigger NAS recovery and transition from 5GMM-CONNECTED inactive to 5GMM-IDLE. In such embodiments, the reestablishment failure report can include a flag that indicates whether the failure was due to timer T301 expiry, IP check failure, selected cell being no longer available, or any other failure that many trigger reestablishments. Similar to resume embodiments, discussed above, exemplary embodiments of the UE's logging and reporting of re-establishment failure information can be specified and/or implemented according to the procedure shown below, which can be a replacement for current 3GPP TS 38.331 sections 5.3.7.5 and 5.3.7.7.

### ^{∗∗∗} Begin proposed 3GPP TS 38.331 text ^{∗∗∗}

### 5.3.7.5 Reception of the RRCReestablishment by the UE

The UE shall:
1> stop timer T301;
1> consider the current cell to be the PCell;
1> store the *nextHopChainingCount* value indicated in the *RRCReestablishment* message;
1> update the K_{gNB} key based on the current K_{gNB} or the NH, using the stored *nextHopChainingCount* value, as specified in TS 33.501 [11];
1>derive the K_{RRCenc} key, the K_{RRCint}, the K_{UPint} key and the K_{UPenc} key associated with the previously configured ciphering algorithm, as specified in TS 33.501 [11];
1>request lower layers to verify the integrity protection of the *RRCReestablishment* message, using the previously configured algorithm and the K_{RRCint} key;
1>if the integrity protection check of the *RRCReestablishment* message fails:
   2> store the following reestablishment failure information in the *VarConnReestFailReport* by setting its fields as follows:
      3> clear the information included in *VarConnReestFailReport,* if any;
      3> set the *plmn-Identity* to the PLMN selected by upper layers from the PLMN(s) included in the *SIB1;*
      3> set the *reestablishmentCauseFailure* to 'ipFailure';
      3> store other fields in *VarConnReestFailReport* related to integrity protection failure;
      3> set the *failedCellId* to the global cell identity of the cell where connection reestablishment failure is detected;
      3> set the *measResultFailedCell* to include the RSRP and RSRQ, if available, of the cell where connection reestablishment failure is detected and based on measurements collected up to the moment the UE detected the failure;
      3> if available, set the *measResultNeighCells,* in order of decreasing ranking-criterion as used for cell re-selection, to include neighbouring cell measurements for at most the following number of neighbouring cells: 6 intra-frequency and 3 inter-frequency neighbours per frequency as well as 3 inter-RAT neighbours, per frequency/ set of frequencies (GERAN) per RAT and according to the following:
         4> for each neighbour cell included, include the optional fields that are available;
      3> store other fields as defined in *VarConnReestFailReport;*
   2>perform the actions upon going to RRC_IDLE as specified in 5.3.11, with release cause 'other', upon which the procedure ends;
1> configure lower layers to activate integrity protection using the previously configured algorithm and the KRRCint key immediately, i.e., integrity protection shall be applied to all subsequent messages received and sent by the UE, including the message used to indicate the successful completion of the procedure;
1> configure lower layers to apply ciphering using the previously configured algorithm, the K_{RRCenc} key and the K_{UPenc} key immediately, i.e., ciphering shall be applied to all subsequent messages received and sent by the UE, including the message used to indicate the successful completion of the procedure;
1> submit the *RRCReestablishmentComplete* message to lower layers for transmission; 1>the procedure ends.

### 5.3.7.7 T301 expiry or selected cell no longer suitable

The UE shall:
1>if timer T301 expires; or
1>if the selected cell becomes no longer suitable according to the cell selection criteria as specified in TS 38.304 [21]:
   2> store the following reestablishment failure information in the *VarConnReestFailReport* by setting its fields as follows:
      3> clear the information included in *VarConnReestFailReport,* if any;
      3> set the *plmn-Identity* to the PLMN selected by upper layers from the PLMN(s) included in the *SIB1;*
      3>if the failure is triggered due to the expiry of timer T301;
         4> set the *reestablishmentCauseFailure* to 'expiryt301';
         4> store other fields in *VarConnReestFailReport* related to the expiry of timer T301;
      3> else, if the failure is triggered due to selected no longer available;
         4> set the *reestablishmentCauseFailure* to 'cellNoLongerAvailable';
         4> store other fields in *VarConnReestFailReport* related to the cell not being available;
      3> set the *failedCellId* to the global cell identity of the cell where connection reestablishment failure is detected;
      3> set the *measResultFailedCell* to include the RSRP and RSRQ, if available, of the cell where connection reestablishment failure is detected and based on measurements collected up to the moment the UE detected the failure;
      3>if available, set the *measResultNeighCells,* in order of decreasing ranking-criterion as used for cell re-selection, to include neighbouring cell measurements for at most the following number of neighbouring cells: 6 intra-frequency and 3 inter-frequency neighbours per frequency as well as 3 inter-RAT neighbours, per frequency/ set of frequencies (GERAN) per RAT and according to the following:
         4> for each neighbour cell included, include the optional fields that are available;
      3> store other fields as defined in *VarConnReestFailReport;*
   2>perform the actions upon going to RRC_IDLE as specified in 5.3.11, with release cause 'RRC connection failure'.

### ^{∗∗∗} End proposed 3GPP TS 38.331 text ^{∗∗∗}

Note that in the above examples, it is assumed that the UE keeps one resume or re-establishment failure report at a time (i.e., new failure results in deletion of the old failure report). However, it is possible to extend the implementation so that multiple reports can be maintained, e.g., indexed with the time they occurred. The number of reports to be maintained can be configured by the network or dependent on UE implementation.

In some embodiments, a UE can include an indication in another message (e.g., *RRCConnectionSetupComplete* or *RRCConnectionReconfigurationComplete*) that it has a resume failure report to send. For example, if an enhanced *VarConnEstFailReport* is available, a *connEstFailInfoAvailable* indication can be included. If a new *VarConnResFailReport* is available, a *connResFailInfoAvailable* indication can be introduced. In such embodiments, existing *UEInformationRequest* and *UEInformationResponse* messages can be used for network request and UE provision of the resume failure report. If *VarConnResFailReport* is used to report the resume failure, a new IE can be introduced in the *UEInformationRequest* message (e.g. *connResFailReportReq*) to indicate to the UE that the network requires it to send the failure report.

Similarly, if a new *VarConnReestFailReport* is available, a *connReestFailInfo-Available* indication can be introduced. In such embodiments, existing *UEInformationRequest* and *UEInformationResponse* messages can be used for network request and UE provision of the re-establishment failure report. If *VarConnReestFailReport* is used to report the re-establishment failure, a new IE can be introduced in the *UEInformationRequest* message (e.g. *connReestFailReportReq*) to indicate to the UE that the network requires it to send the failure report.

Regardless of the type of reporting message used, in some embodiments, upon detecting an IP failure, the UE can log and report signal- and/or interference-level measurements associated to the cell where the failure has occurred. Measurements can include reference signal received power (RSRP), reference signal received quality (RSRQ), and/or signal to interference plus noise ratio (SINR) of the failed cell. That may also include measurements per cell and/or per beam. This can be provided, e.g., in the *measResultFailedCell* IE shown in the above implementation.

In some embodiments, in addition to *measResultFailedCell* that includes RSRP, RSRP, and/or SINR, the failure report (e.g., *VarConnResFailReport* or *VarConnReestFailReport*) can include measurement results of NR and LTE neighbor and/or serving cells, e.g., *measResultListNR* and *measResultListEUTRA.* As mentioned above, in some embodiments, a resume failure report can include an indication (e.g., a flag) of whether the failure was due to timer T319 expiry or due to IP check failure. Likewise, a re-establishment failure report can include an indication (e.g., a flag) of whether the failure was due to timer T301 expiry, IP check failure, selected cell being no longer available, or any other failure that many trigger re-establishment.

The UE can also log and/or report various other information that can help the network distinguish between different types of resume or re-establishment failures. For example, upon detecting an IP failure, the UE can store and log the entire message that failed integrity verification. In NR that message may be encrypted, hence, that may be logged as an octet string. In case the message is not encrypted, like in LTE, specific content of the message may be logged instead of the octet string. This can also occur in NR if the encryption keys were compromised by the fake base station such that the message can be decrypted and/or understood by the UE.

In such embodiments, the logged entire message can include an *RRCResume* message or an *RRCRelease* message, both of which are defined in 3GPP TS 38.331. The inclusion of the *RRCResume* or *RRCRelease* message in the resume failure report can be useful for the network in different ways. If IP failure occurs because the UE was camping on a fake base station, that fake base station may have provided a specific malicious configuration to the UE, e.g., a measurement configuration including a list of black-listed cells or white-listed cells that can be related to the fake base station.

Similarly, upon detecting an IP failure during re-establishment, the UE can store and log the entire message that failed integrity verification. For example, the logged entire message can include an *RRCReestablishment* message or an *RRCReconfiguration* message, both of which are defined in 3GPP TS 38.331. The inclusion of the *RRCReestablishment RRCReconfiguration* message in the re-establishment failure report can be useful for the network in similar ways as the inclusion of an *RRCResume* or *RRCRelease* message, discussed above.

In other embodiments, upon detecting a resume or re-establishment failure related to failed integrity verification and/or security, the UE can log and report both the Message Authentication Code - Integrity (MAC-I) that it calculated and the MAC-I that was in the received message. As discussed above, the MAC-I is computed by the Packet Data Convergence Protocol (PDCP) layer in both the network and the UE, and included in the PDCP header of the respective packets. When the receiver receives the PDCP packet, it computes and verifies the MAC-I using the same inputs and algorithms as the transmitter so that each side can be authenticated.

By logging and reporting the non-matching MAC-I's that were generated by the UE and provided by the network in the failed response message, the UE can provide the network with a capability to compare both and, possibly, determine what may have occurred in the target network node and at the UE during MAC-I generation. For example, the network can check the UE AS context and check which security algorithms were being used, the NCC received to compute the security keys, KgNBs, etc.

In some embodiments, upon detecting an IP failure, the UE can log and report other information from its stored AS context. For example, the UE can report its security context, such as the security keys the UE has used to derive the MAC-I. By reporting all or a portion of its AS context, including the security context that the UE generated, the UE can provide the network with the capability to verify whether the same keys were being used in the network (e.g., in the target) and the UE to generate the MAC-I.

In some embodiments, upon detecting an IP failure, the UE can log and report one or multiple cell identifiers of the cell where the UE was camping when the resume or re-establishment failure occurred. The cell identifiers can be a unique cell identity, a physical cell identity (PCI), a global cell identity (CGI), etc. In some embodiments, upon detecting an IP failure, the UE can log and report one or multiple PLMN identifiers of the cell where the UE was camping when the resume or re-establishment failure occurred.

Upon reception of cell and/or network identifiers in the failure report, the network can determine whether the failed cell is a real cell associated with a legitimate base station or node, or a fake cell associated with a malicious agent. For example, the network can verify whether the reported cell belongs to its neighbour relation by querying another node in the network side about whether the reported cell is a valid cell. Upon verifying the reported cell is fake and/or is provided by a fake network node, the network node that received the failure report can perform actions with respect to that cell with respect to the reporting UE and/or other UEs that it serves. For example, the network can blacklist the reported cell in measurement configuration, match CGI reports for the reported cell, etc.

In some embodiments, upon detecting an IP failure, the UE can log and report the frequency information of the cell where the UE was camping when the resume or re-establishment failure occurred. For example, the frequency information may be an ARFCN of the SS-Block the UE was camping on when the failure occurred. In conventional approaches that report CGI in the event of failure, the failure is assumed to be related to a real base station, such that frequency information can be determined from CGI and does not need to be reported. However, a fake base station may not follow established relations, such that the network would not be able to determine frequency information from CGI. Furthermore, frequency information is also necessary and/or useful when PCI rather than CGI is logged and reported. In either event, the frequency reported can be important because it informs the real network in which frequency a fake base station may be operating.

In some embodiments, upon detecting an IP failure, the UE can log and report its location information when the resume or re-establishment failure occurred. The network can employ the reported location information to narrow down the location of the fake base station. For example, if the network notices that a multitude of integrity verification failures are being reported within a very short time, it can use the location information provided in these reports to estimate the location of the fake base station. In case the fake base station is stationary, a DoS attack of longer duration can be prevented by locating and disabling the fake base station. Even in the case of a mobile fake base station that is mobile, its trajectory and/or path can be deduced from the location reports, and with the help of other information (e.g. CCTV), it could be possible to track and find it (and possibly also the responsible parties).

Although the solutions described here are considering intra-NR resume or re-establishment, the solutions can also be applied for inter-RAT Resume, where the UE is suspended in NR and resumes in E-UTRA or when the UE is suspended in E-UTRA and resumes in NR. Likewise, the solutions can also be applied for inter-RAT re-establishment, where the UE fails in NR and re-establishes in E-UTRA or when the UE fails in E-UTRA and re-establishes in NR. Currently, inter-RAT resume and re-establishment are not supported in the specifications. In addition, though most of description is focused on the NR case, the solutions are equally applicable to resume in E-UTRA, either from the Release 13 suspend state or the Release 15 RRC_INACTIVE, as well as re-establishment in E-UTRA.

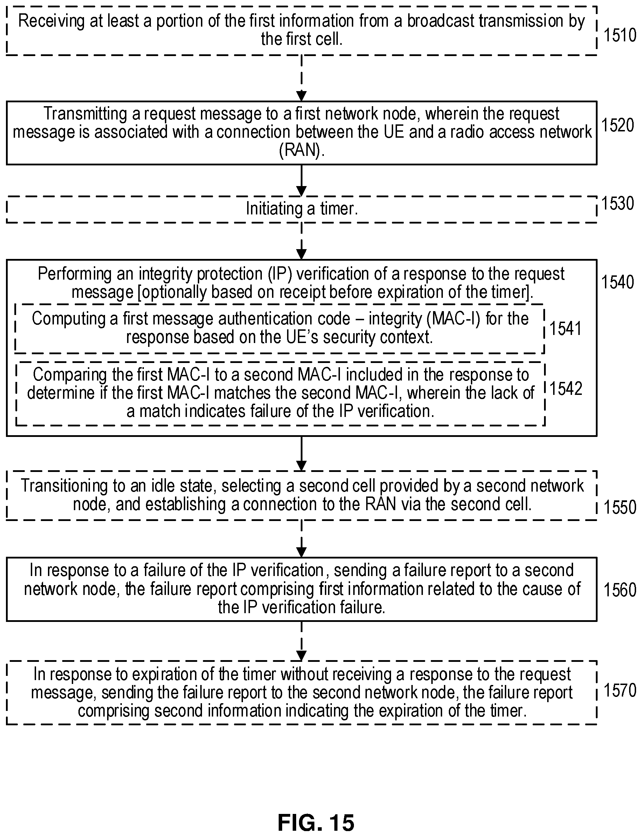

These embodiments described above can be further illustrated with reference to Figures 15-16, which depict exemplary methods and/or procedures performed by a UE and a network node, respectively. In other words, various features of the operations described below, with reference to Figures 15-16, correspond to various embodiments described above.

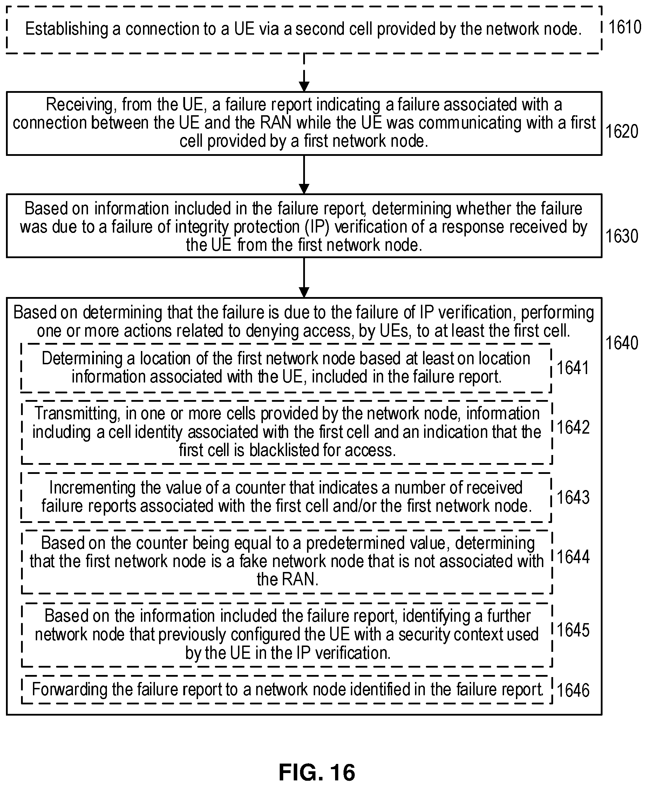

More specifically, Figure 15 is a flow diagram illustrating an inventive method and/or procedure for reporting failures that occur during communication with a first cell associated with a first network node. The method and/or procedure shown in Figure 15 can be implemented, for example, in a user equipment (UE, e.g., wireless device) described in relation to other figures herein. The method and/or procedure shown in Figure 15 can also be used cooperatively with other exemplary methods and/or procedure described herein (e.g., Figure 16) to provide various benefits, advantages, and/or solutions described herein. Although Figure 15 shows specific blocks in a particular order, the operations of the exemplary method and/or procedure can be performed in a different order than shown and can be combined and/or divided into blocks having different functionality than shown. Optional blocks and/or operations are indicated by dashed lines.

The method and/or procedure illustrated in Figure 15 can include the operations of block 1520, in which the UE can transmit a request message to the first network node, wherein the request message is associated with a connection between the UE and a radio access network (RAN). In the method and/or procedure are included the operations of block 1530, in which the UE initiates a timer upon transmitting the request message.

In some embodiments, the request message (e.g., an *RRCResumeRequest* message) can be associated with resuming a suspended connection between the UE and the RAN. In such embodiments, the timer can be timer T319, as discussed above. In other embodiments, the request message (e.g., an *RRCReestablishmentRequest* message) is associated with re-establishing a connection between the UE and the RAN after occurrence of a failure. In such embodiments, the timer can be timer T301, as discussed above.

The method and/or procedure includes the operations of block 1540, in which the UE performs integrity protection (IP) verification of a response to the request message. For example, in embodiments involving initiating the timer (e.g., in block 1530), the operations in block 1540 can be based on receiving the response before expiration of the timer.

In some embodiments, the operations of block 1540 can include the operations of sub-blocks 1541-1542. In sub-block 1541, the UE can compute a first message authentication code - integrity (MAC-I) for the response based on the UE's security context. In sub-block 1542, the UE can compare the first MAC-I to a second MAC-I included in the response to determine if the first MAC-I matches the second MAC-I. For example, the lack of a match indicates failure of the IP verification.

In some embodiments, the exemplary method and/or procedure can also include the operations of block 1550, in which the UE can performing the following operations in response to the failure of the IP verification: transitioning to an idle state; selecting a second cell associated with the second network node; and establishing a connection to the RAN via the second cell.

The method and/or procedure includes the operations of block 1560, in which the UE , in response to a failure of the IP verification (e.g., in block 1540), sends a failure report to a second network node. In some embodiments, this can be performed after the operations of block 1550. In some embodiments, the second network node can be part of the RAN, while the first network node is a fake network node that is not part of the RAN. In other embodiments, the second network node can be the same as the first network node. In such embodiments, the failure report is sent to the second (first) network node to via a second cell different from the first cell (e.g., in which the failure occurred).

The failure report can include first information related to the IP verification failure. In some embodiments, the exemplary method and/or procedure can also include the operations of block 1510, in which the UE can receive at least a portion of the first information, included in the failure report, from a broadcast transmission by the first cell (e.g., in a MIB or a SIB, such as shown in Figures 13-14).

In some embodiments, the first information in the failure report can include the first MAC-I and the second MAC-I, discussed above. In various embodiments, the first information in the failure report can also include one or more of the following:
- one or more cell identities associated with the first cell;
- a network identity associated with the first cell;
- frequency information associated with the first cell;
- signal and/or interference measurements associated with the first cell;
- signal and/or interference measurements associated with one or more neighbor cells of the first cell;
- an identity associated with the first network node;
- at least a portion of the received response;
- at least a portion of the UE's security context; and
- location information associated with the UE.

In some embodiments, the failure report, sent in response to the failure of the IP verification, includes further first information related to one or more further IP verification failures that occurred prior to the failure of the IP verification.

The method and/or procedure includes the operations of block 1570, in which the UE in response to expiration of the timer without receiving a response to the request message, sends a failure report, to the second network node, that includes information indicating the expiration of the timer. In some embodiments, the failure report can also include an indication of whether the failure report includes the second information or the first information (e.g., as sent in block 1560).

In addition, Figure 16 is a flow diagram illustrating an inventive method and/or procedure for processing failure reports from one or more user equipment (UE). The method is implemented by a second network node (e.g., eNB, gNB, base station, or component thereof) of a radio access network (RAN), as described in relation to other figures herein. The method and/or procedure shown in Figure 16 can also be used cooperatively with other exemplary methods and/or procedures described herein (e.g., Figure 15) to provide various benefits, advantages, and/or solutions described herein. Although Figure 16 shows specific blocks in a particular order, the operations of the exemplary method and/or procedure can be performed in a different order than shown and can be combined and/or divided into blocks having different functionality than shown. Optional blocks and/or operations are indicated by dashed lines.

The method and/or procedure illustrated in Figure 16 includes the operations of block 1620, in which the second network node receives, from a UE, a failure report indicating a failure associated with a connection between the UE and the RAN while the UE was communicating with a first cell associated with a first network node. In some embodiments, the first network node can be a fake network node that (unlike the network node) is not part of the RAN. In other embodiments, the second network node can be the same as the first network node. In such embodiments, the failure report can be received via a second cell different from the first cell (e.g., in which the failure occurred).

In some embodiments, the method and/or procedure can also include the operations of block 1610, where the second network node can, prior to receiving the failure report, establish a connection to the UE via a second cell associated with the second network node.

The method and/or procedure includes the operations of block 1630, where the second network node can, based on information included in the failure report, determine whether the failure was due to a failure of integrity protection (IP) verification of a response received by the UE from the first network node. In some embodiments, the failure report can include either first information related to the failure of IP verification of the response, or second information identifying that the failure was due to expiration of a timer without receiving a response from the first network node. In some embodiments, the failure report can also include an indication of whether the failure report includes the first information or the second information. In some embodiments, if the failure report includes the first information, the failure report can also include further first information related to one or more further IP verification failures that occurred prior to the failure of IP verification of the response.

In some embodiments, the failure report can be associated with resuming a suspended connection between the UE and the RAN. In such embodiments, the timer can be timer T319, as discussed above. In other embodiments, the failure report can be associated with re-establishing a connection between the UE and the RAN after occurrence of a failure. In such embodiments, the timer can be timer T301, as discussed above.

In various embodiments, the first information in the failure report can also include one or more of the following:
- one or more cell identities associated with the first cell;
- a network identity associated with the first cell;
- frequency information associated with the first cell;
- signal and/or interference measurements associated with the first cell;
- signal and/or interference measurements associated with one or more neighbor cells of the first cell;
- an identity associated with the first network node;
- at least a portion of the response;
- at least a portion of the UE's security context;
- a first message authentication code - integrity (MAC-I) computed by the UE for the response;
- a second MAC-I included in the response; and
- location information associated with the UE.

The method and/or procedure includes the operations of block 1640, where the second network node based on determining that the failure is due to the failure of IP verification, performs one or more actions related to denying access, by UEs, to at least the first cell (i.e., the cell in which the reported failure occurred).

In some embodiments, the operations of block 1640 can include the operations of sub-block 1641, where the second network node can determine a location of the first network node based at least on the location information associated with the UE. In some embodiments, the operations of block 1640 can include the operations of sub-block 1642, where the second network node can transmit, in one or more cells associated with the second network node, information including a cell identity associated with the first cell and an indication that the first cell is blacklisted for access. In some embodiments, the transmitted information can also include an indication that one or more further cells provided by the first network node are blacklisted for access.

In some embodiments, the operations of block 1640 can include the operations of sub-blocks 1643-1644. In sub-block 1643, the second network node can increment the value of a counter that indicates a number of received failure reports associated with the first cell and/or the first network node. In sub-block 1644, the second network node can, based on the counter being equal to a predetermined value, determine that the first network node is a fake network node that is not associated with the RAN.

In some embodiments, the operations of block 1640 can include the operations of sub-block 1645, where the second network node can, based on the information included the failure report, identify a further network node that previously configured the UE with a security context used by the UE in the IP verification. In some embodiments, the operations of block 1640 can include the operations of sub-block 1646, where the second network node can forward the failure report to a network node identified in the failure report.

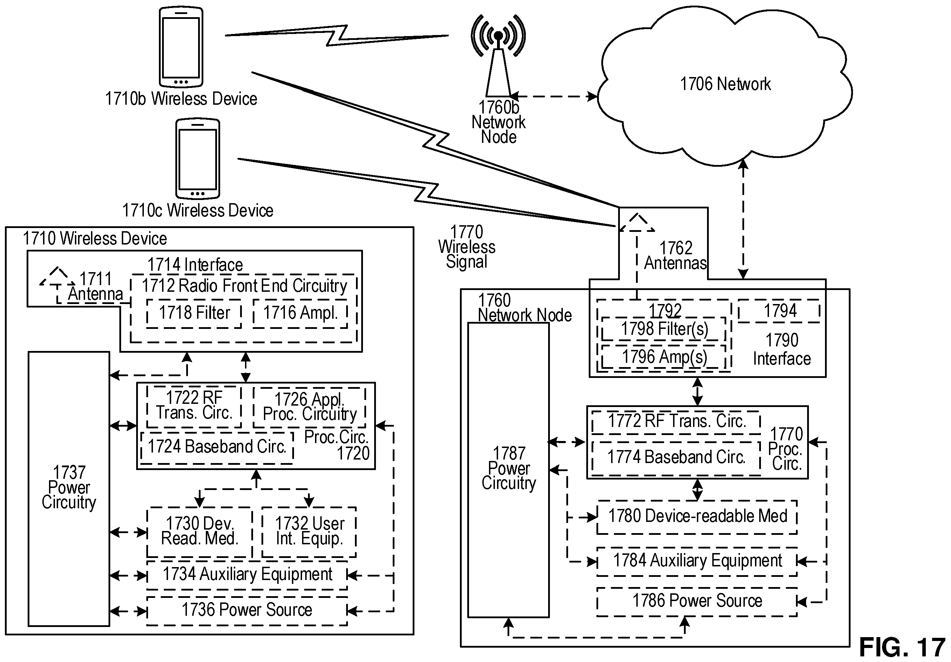

Although the subject matter described herein can be implemented in any appropriate type of system using any suitable components, the embodiments disclosed herein are described in relation to a wireless network, such as the example wireless network illustrated in Figure 17. For simplicity, the wireless network of Figure 17 only depicts network 1706, network nodes 1760 and 1760b, and WDs 1710, 1710b, and 1710c. In practice, a wireless network can further include any additional elements suitable to support communication between wireless devices or between a wireless device and another communication device, such as a landline telephone, a service provider, or any other network node or end device. Of the illustrated components, network node 1760 and wireless device (WD) 1710 are depicted with additional detail. The wireless network can provide communication and other types of services to one or more wireless devices to facilitate the wireless devices' access to and/or use of the services provided by, or via, the wireless network.

The wireless network can comprise and/or interface with any type of communication, telecommunication, data, cellular, and/or radio network or other similar type of system. In some embodiments, the wireless network can be configured to operate according to specific standards or other types of predefined rules or procedures. Thus, particular embodiments of the wireless network can implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.17 standards; and/or any other appropriate wireless communication standard, such as the Worldwide Interoperability for Microwave Access (WiMax), Bluetooth, Z-Wave and/or ZigBee standards.

Network 1706 can comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1760 and WD 1710 comprise various components described in more detail below. These components work together in order to provide network node and/or wireless device functionality, such as providing wireless connections in a wireless network. In different embodiments, the wireless network can comprise any number of wired or wireless networks, network nodes, base stations, controllers, wireless devices, relay stations, and/or any other components or systems that can facilitate or participate in the communication of data and/or signals whether via wired or wireless connections.

Examples of network nodes include, but are not limited to, access points (APs) (*e.g.,* radio access points) and base stations (BS, *e.g.,* radio base stations, NBs, eNBs, and gNBs). Base stations can be categorized based on the amount of coverage they provide (or, stated differently, their transmit power level) and can then also be referred to as femto base stations, pico base stations, micro base stations, or macro base stations. A base station can be a relay node or a relay donor node controlling a relay. A network node can also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station can also be referred to as nodes in a distributed antenna system (DAS).

Further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node can be a virtual network node as described in more detail below.

In Figure 17, network node 1760 includes processing circuitry 1770, device readable medium 1780, interface 1790, auxiliary equipment 1784, power source 1786, power circuitry 1787, and antenna 1762. Although network node 1760 illustrated in the example wireless network of Figure 17 can represent a device that includes the illustrated combination of hardware components, other embodiments can comprise network nodes with different combinations of components. It is to be understood that a network node comprises any suitable combination of hardware and/or software needed to perform the tasks, features, functions and methods and/or procedures disclosed herein. Moreover, while the components of network node 1760 are depicted as single boxes located within a larger box, or nested within multiple boxes, in practice, a network node can comprise multiple different physical components that make up a single illustrated component (e.g., device readable medium 1780 can comprise multiple separate hard drives as well as multiple RAM modules).

Similarly, network node 1760 can be composed of multiple physically separate components (e.g., a NodeB component and a RNC component, or a BTS component and a BSC component, etc.), which can each have their own respective components. In certain scenarios in which network node 1760 comprises multiple separate components (e.g., BTS and BSC components), one or more of the separate components can be shared among several network nodes. For example, a single RNC can control multiple NodeB's. In such a scenario, each unique NodeB and RNC pair, can in some instances be considered a single separate network node. In some embodiments, network node 1760 can be configured to support multiple radio access technologies (RATs). In such embodiments, some components can be duplicated (e.g., separate device readable medium 1780 for the different RATs) and some components can be reused (e.g., the same antenna 1762 can be shared by the RATs). Network node 1760 can also include multiple sets of the various illustrated components for different wireless technologies integrated into network node 1760, such as, for example, GSM, WCDMA, LTE, NR, WiFi, or Bluetooth wireless technologies. These wireless technologies can be integrated into the same or different chip or set of chips and other components within network node 1760.

Processing circuitry 1770 can be configured to perform any determining, calculating, or similar operations (e.g., certain obtaining operations) described herein as being provided by a network node. These operations performed by processing circuitry 1770 can include processing information obtained by processing circuitry 1770 by, for example, converting the obtained information into other information, comparing the obtained information or converted information to information stored in the network node, and/or performing one or more operations based on the obtained information or converted information, and as a result of said processing making a determination.

Processing circuitry 1770 can comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1760 components, such as device readable medium 1780, network node 1760 functionality. For example, processing circuitry 1770 can execute instructions stored in device readable medium 1780 or in memory within processing circuitry 1770. Such functionality can include providing any of the various wireless features, functions, or benefits discussed herein. In some embodiments, processing circuitry 1770 can include a system on a chip (SOC).

In some embodiments, processing circuitry 1770 can include one or more of radio frequency (RF) transceiver circuitry 1772 and baseband processing circuitry 1774. In some embodiments, radio frequency (RF) transceiver circuitry 1772 and baseband processing circuitry 1774 can be on separate chips (or sets of chips), boards, or units, such as radio units and digital units. In alternative embodiments, part or all of RF transceiver circuitry 1772 and baseband processing circuitry 1774 can be on the same chip or set of chips, boards, or units

In certain embodiments, some or all of the functionality described herein as being provided by a network node, base station, eNB or other such network device can be performed by processing circuitry 1770 executing instructions stored on device readable medium 1780 or memory within processing circuitry 1770. In alternative embodiments, some or all of the functionality can be provided by processing circuitry 1770 without executing instructions stored on a separate or discrete device readable medium, such as in a hard-wired manner. In any of those embodiments, whether executing instructions stored on a device readable storage medium or not, processing circuitry 1770 can be configured to perform the described functionality. The benefits provided by such functionality are not limited to processing circuitry 1770 alone or to other components of network node 1760, but are enjoyed by network node 1760 as a whole, and/or by end users and the wireless network generally.

Device readable medium 1780 can comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that can be used by processing circuitry 1770. Device readable medium 1780 can store any suitable instructions, data or information, including a computer program, software, an application including one or more of logic, rules, code, tables, etc. and/or other instructions capable of being executed by processing circuitry 1770 and, utilized by network node 1760. Device readable medium 1780 can be used to store any calculations made by processing circuitry 1770 and/or any data received via interface 1790. In some embodiments, processing circuitry 1770 and device readable medium 1780 can be considered to be integrated.

Interface 1790 is used in the wired or wireless communication of signalling and/or data between network node 1760, network 1706, and/or WDs 1710. As illustrated, interface 1790 comprises port(s)/terminal(s) 1794 to send and receive data, for example to and from network 1706 over a wired connection. Interface 1790 also includes radio front end circuitry 1792 that can be coupled to, or in certain embodiments a part of, antenna 1762. Radio front end circuitry 1792 comprises filters 1798 and amplifiers 1796. Radio front end circuitry 1792 can be connected to antenna 1762 and processing circuitry 1770. Radio front end circuitry can be configured to condition signals communicated between antenna 1762 and processing circuitry 1770. Radio front end circuitry 1792 can receive digital data that is to be sent out to other network nodes or WDs via a wireless connection. Radio front end circuitry 1792 can convert the digital data into a radio signal having the appropriate channel and bandwidth parameters using a combination of filters 1798 and/or amplifiers 1796. The radio signal can then be transmitted via antenna 1762. Similarly, when receiving data, antenna 1762 can collect radio signals which are then converted into digital data by radio front end circuitry 1792. The digital data can be passed to processing circuitry 1770. In other embodiments, the interface can comprise different components and/or different combinations of components.

In certain alternative embodiments, network node 1760 may not include separate radio front end circuitry 1792, instead, processing circuitry 1770 can comprise radio front end circuitry and can be connected to antenna 1762 without separate radio front end circuitry 1792. Similarly, in some embodiments, all or some of RF transceiver circuitry 1772 can be considered a part of interface 1790. In still other embodiments, interface 1790 can include one or more ports or terminals 1794, radio front end circuitry 1792, and RF transceiver circuitry 1772, as part of a radio unit (not shown), and interface 1790 can communicate with baseband processing circuitry 1774, which is part of a digital unit (not shown).

Antenna 1762 can include one or more antennas, or antenna arrays, configured to send and/or receive wireless signals. Antenna 1762 can be coupled to radio front end circuitry 1790 and can be any type of antenna capable of transmitting and receiving data and/or signals wirelessly. In some embodiments, antenna 1762 can comprise one or more omni-directional, sector or panel antennas operable to transmit/receive radio signals between, for example, 2 GHz and 66 GHz. An omni-directional antenna can be used to transmit/receive radio signals in any direction, a sector antenna can be used to transmit/receive radio signals from devices within a particular area, and a panel antenna can be a line of sight antenna used to transmit/receive radio signals in a relatively straight line. In some instances, the use of more than one antenna can be referred to as MIMO. In certain embodiments, antenna 1762 can be separate from network node 1760 and can be connectable to network node 1760 through an interface or port.

Antenna 1762, interface 1790, and/or processing circuitry 1770 can be configured to perform any receiving operations and/or certain obtaining operations described herein as being performed by a network node. Any information, data and/or signals can be received from a wireless device, another network node and/or any other network equipment. Similarly, antenna 1762, interface 1790, and/or processing circuitry 1770 can be configured to perform any transmitting operations described herein as being performed by a network node. Any information, data and/or signals can be transmitted to a wireless device, another network node and/or any other network equipment.

Power circuitry 1787 can comprise, or be coupled to, power management circuitry and can be configured to supply the components of network node 1760 with power for performing the functionality described herein. Power circuitry 1787 can receive power from power source 1786. Power source 1786 and/or power circuitry 1787 can be configured to provide power to the various components of network node 1760 in a form suitable for the respective components (e.g., at a voltage and current level needed for each respective component). Power source 1786 can either be included in, or external to, power circuitry 1787 and/or network node 1760. For example, network node 1760 can be connectable to an external power source (e.g., an electricity outlet) via an input circuitry or interface such as an electrical cable, whereby the external power source supplies power to power circuitry 1787. As a further example, power source 1786 can comprise a source of power in the form of a battery or battery pack which is connected to, or integrated in, power circuitry 1787. The battery can provide backup power should the external power source fail. Other types of power sources, such as photovoltaic devices, can also be used.

Alternative embodiments of network node 1760 can include additional components beyond those shown in Figure 17 that can be responsible for providing certain aspects of the network node's functionality, including any of the functionality described herein and/or any functionality necessary to support the subject matter described herein. For example, network node 1760 can include user interface equipment to allow and/or facilitate input of information into network node 1760 and to allow and/or facilitate output of information from network node 1760. This can allow and/or facilitate a user to perform diagnostic, maintenance, repair, and other administrative functions for network node 1760.

In some embodiments, a wireless device (WD, e.g., WD 1710) can be configured to transmit and/or receive information without direct human interaction. For instance, a WD can be designed to transmit information to a network on a predetermined schedule, when triggered by an internal or external event, or in response to requests from the network. Examples of a WD include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, etc.

A WD can support device-to-device (D2D) communication, for example by implementing a 3GPP standard for sidelink communication, vehicle-to-vehicle (V2V), vehicle-to-infrastructure (V2I), vehicle-to-everything (V2X) and can in this case be referred to as a D2D communication device. As yet another specific example, in an Internet of Things (IoT) scenario, a WD can represent a machine or other device that performs monitoring and/or measurements, and transmits the results of such monitoring and/or measurements to another WD and/or a network node. The WD can in this case be a machine-to-machine (M2M) device, which can in a 3GPP context be referred to as an MTC device. As one particular example, the WD can be a UE implementing the 3GPP narrow band internet of things (NB-IoT) standard. Particular examples of such machines or devices are sensors, metering devices such as power meters, industrial machinery, or home or personal appliances (e.g., refrigerators, televisions, etc.) personal wearables (e.g., watches, fitness trackers, etc.). In other scenarios, a WD can represent a vehicle or other equipment that is capable of monitoring and/or reporting on its operational status or other functions associated with its operation. A WD as described above can represent the endpoint of a wireless connection, in which case the device can be referred to as a wireless terminal. Furthermore, a WD as described above can be mobile, in which case it can also be referred to as a mobile device or a mobile terminal.

As illustrated, wireless device 1710 includes antenna 1711, interface 1714, processing circuitry 1720, device readable medium 1730, user interface equipment 1732, auxiliary equipment 1734, power source 1736 and power circuitry 1737. WD 1710 can include multiple sets of one or more of the illustrated components for different wireless technologies supported by WD 1710, such as, for example, GSM, WCDMA, LTE, NR, WiFi, WiMAX, or Bluetooth wireless technologies, just to mention a few. These wireless technologies can be integrated into the same or different chips or set of chips as other components within WD 1710.

Antenna 1711 can include one or more antennas or antenna arrays, configured to send and/or receive wireless signals, and is connected to interface 1714. In certain alternative embodiments, antenna 1711 can be separate from WD 1710 and be connectable to WD 1710 through an interface or port. Antenna 1711, interface 1714, and/or processing circuitry 1720 can be configured to perform any receiving or transmitting operations described herein as being performed by a WD. Any information, data and/or signals can be received from a network node and/or another WD. In some embodiments, radio front end circuitry and/or antenna 1711 can be considered an interface.

As illustrated, interface 1714 comprises radio front end circuitry 1712 and antenna 1711. Radio front end circuitry 1712 comprise one or more filters 1718 and amplifiers 1716. Radio front end circuitry 1714 is connected to antenna 1711 and processing circuitry 1720, and can be configured to condition signals communicated between antenna 1711 and processing circuitry 1720. Radio front end circuitry 1712 can be coupled to or a part of antenna 1711. In some embodiments, WD 1710 may not include separate radio front end circuitry 1712; rather, processing circuitry 1720 can comprise radio front end circuitry and can be connected to antenna 1711. Similarly, in some embodiments, some or all of RF transceiver circuitry 1722 can be considered a part of interface 1714. Radio front end circuitry 1712 can receive digital data that is to be sent out to other network nodes or WDs via a wireless connection. Radio front end circuitry 1712 can convert the digital data into a radio signal having the appropriate channel and bandwidth parameters using a combination of filters 1718 and/or amplifiers 1716. The radio signal can then be transmitted via antenna 1711. Similarly, when receiving data, antenna 1711 can collect radio signals which are then converted into digital data by radio front end circuitry 1712. The digital data can be passed to processing circuitry 1720. In other embodiments, the interface can comprise different components and/or different combinations of components.

Processing circuitry 1720 can comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 1710 components, such as device readable medium 1730, WD 1710 functionality. Such functionality can include providing any of the various wireless features or benefits discussed herein. For example, processing circuitry 1720 can execute instructions stored in device readable medium 1730 or in memory within processing circuitry 1720 to provide the functionality disclosed herein.

As illustrated, processing circuitry 1720 includes one or more of RF transceiver circuitry 1722, baseband processing circuitry 1724, and application processing circuitry 1726. In other embodiments, the processing circuitry can comprise different components and/or different combinations of components. In certain embodiments processing circuitry 1720 of WD 1710 can comprise a SOC. In some embodiments, RF transceiver circuitry 1722, baseband processing circuitry 1724, and application processing circuitry 1726 can be on separate chips or sets of chips. In alternative embodiments, part or all of baseband processing circuitry 1724 and application processing circuitry 1726 can be combined into one chip or set of chips, and RF transceiver circuitry 1722 can be on a separate chip or set of chips. In still alternative embodiments, part or all of RF transceiver circuitry 1722 and baseband processing circuitry 1724 can be on the same chip or set of chips, and application processing circuitry 1726 can be on a separate chip or set of chips. In yet other alternative embodiments, part or all of RF transceiver circuitry 1722, baseband processing circuitry 1724, and application processing circuitry 1726 can be combined in the same chip or set of chips. In some embodiments, RF transceiver circuitry 1722 can be a part of interface 1714. RF transceiver circuitry 1722 can condition RF signals for processing circuitry 1720.

In certain embodiments, some or all of the functionality described herein as being performed by a WD can be provided by processing circuitry 1720 executing instructions stored on device readable medium 1730, which in certain embodiments can be a computer-readable storage medium. In alternative embodiments, some or all of the functionality can be provided by processing circuitry 1720 without executing instructions stored on a separate or discrete device readable storage medium, such as in a hard-wired manner. In any of those particular embodiments, whether executing instructions stored on a device readable storage medium or not, processing circuitry 1720 can be configured to perform the described functionality. The benefits provided by such functionality are not limited to processing circuitry 1720 alone or to other components of WD 1710, but are enjoyed by WD 1710 as a whole, and/or by end users and the wireless network generally.

Processing circuitry 1720 can be configured to perform any determining, calculating, or similar operations (e.g., certain obtaining operations) described herein as being performed by a WD. These operations, as performed by processing circuitry 1720, can include processing information obtained by processing circuitry 1720 by, for example, converting the obtained information into other information, comparing the obtained information or converted information to information stored by WD 1710, and/or performing one or more operations based on the obtained information or converted information, and as a result of said processing making a determination.

Device readable medium 1730 can be operable to store a computer program, software, an application including one or more of logic, rules, code, tables, etc. and/or other instructions capable of being executed by processing circuitry 1720. Device readable medium 1730 can include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that can be used by processing circuitry 1720. In some embodiments, processing circuitry 1720 and device readable medium 1730 can be considered to be integrated.

User interface equipment 1732 can include components that allow and/or facilitate a human user to interact with WD 1710. Such interaction can be of many forms, such as visual, audial, tactile, etc. User interface equipment 1732 can be operable to produce output to the user and to allow and/or facilitate the user to provide input to WD 1710. The type of interaction can vary depending on the type of user interface equipment 1732 installed in WD 1710. For example, if WD 1710 is a smart phone, the interaction can be via a touch screen; if WD 1710 is a smart meter, the interaction can be through a screen that provides usage (e.g., the number of gallons used) or a speaker that provides an audible alert (e.g., if smoke is detected). User interface equipment 1732 can include input interfaces, devices and circuits, and output interfaces, devices and circuits. User interface equipment 1732 can be configured to allow and/or facilitate input of information into WD 1710, and is connected to processing circuitry 1720 to allow and/or facilitate processing circuitry 1720 to process the input information. User interface equipment 1732 can include, for example, a microphone, a proximity or other sensor, keys/buttons, a touch display, one or more cameras, a USB port, or other input circuitry. User interface equipment 1732 is also configured to allow and/or facilitate output of information from WD 1710, and to allow and/or facilitate processing circuitry 1720 to output information from WD 1710. User interface equipment 1732 can include, for example, a speaker, a display, vibrating circuitry, a USB port, a headphone interface, or other output circuitry. Using one or more input and output interfaces, devices, and circuits, of user interface equipment 1732, WD 1710 can communicate with end users and/or the wireless network, and allow and/or facilitate them to benefit from the functionality described herein.

Auxiliary equipment 1734 is operable to provide more specific functionality which may not be generally performed by WDs. This can comprise specialized sensors for doing measurements for various purposes, interfaces for additional types of communication such as wired communications etc. The inclusion and type of components of auxiliary equipment 1734 can vary depending on the embodiment and/or scenario.

Power source 1736 can, in some embodiments, be in the form of a battery or battery pack. Other types of power sources, such as an external power source (e.g., an electricity outlet), photovoltaic devices or power cells, can also be used. WD 1710 can further comprise power circuitry 1737 for delivering power from power source 1736 to the various parts of WD 1710 which need power from power source 1736 to carry out any functionality described or indicated herein. Power circuitry 1737 can in certain embodiments comprise power management circuitry. Power circuitry 1737 can additionally or alternatively be operable to receive power from an external power source; in which case WD 1710 can be connectable to the external power source (such as an electricity outlet) via input circuitry or an interface such as an electrical power cable. Power circuitry 1737 can also in certain embodiments be operable to deliver power from an external power source to power source 1736. This can be, for example, for the charging of power source 1736. Power circuitry 1737 can perform any converting or other modification to the power from power source 1736 to make it suitable for supply to the respective components of WD 1710.

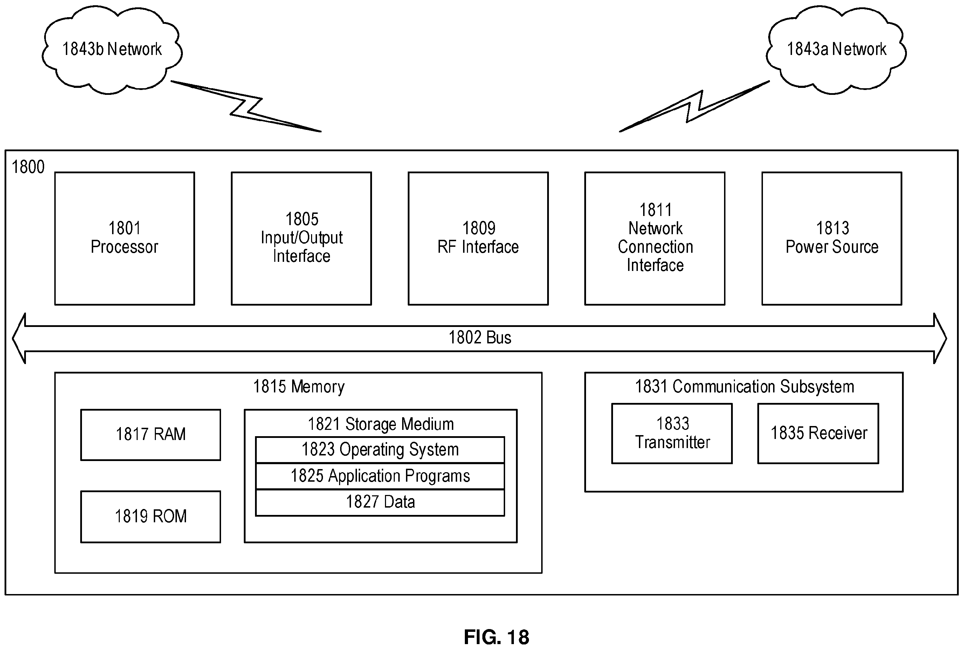

Figure 18 illustrates one embodiment of a UE in accordance with various aspects described herein. As used herein, a user equipment or UE may not necessarily have a user in the sense of a human user who owns and/or operates the relevant device. Instead, a UE can represent a device that is intended for sale to, or operation by, a human user but which may not, or which may not initially, be associated with a specific human user (e.g., a smart sprinkler controller). Alternatively, a UE can represent a device that is not intended for sale to, or operation by, an end user but which can be associated with or operated for the benefit of a user (e.g., a smart power meter). UE 1800 can be any UE identified by the 3^{rd} Generation Partnership Project (3GPP), including a NB-IoT UE, a machine type communication (MTC) UE, and/or an enhanced MTC (eMTC) UE. UE 1800, as illustrated in Figure 18, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE can be used interchangeable. Accordingly, although Figure 18 is a UE, the components discussed herein are equally applicable to a WD, and vice-versa.

In Figure 18, UE 1800 includes processing circuitry 1801 that is operatively coupled to input/output interface 1805, radio frequency (RF) interface 1809, network connection interface 1811, memory 1815 including random access memory (RAM) 1817, read-only memory (ROM) 1819, and storage medium 1821 or the like, communication subsystem 1831, power source 1833, and/or any other component, or any combination thereof. Storage medium 1821 includes operating system 1823, application program 1825, and data 1827. In other embodiments, storage medium 1821 can include other similar types of information. Certain UEs can utilize all of the components shown in Figure 18, or only a subset of the components. The level of integration between the components can vary from one UE to another UE. Further, certain UEs can contain multiple instances of a component, such as multiple processors, memories, transceivers, transmitters, receivers, etc.

In Figure 18, processing circuitry 1801 can be configured to process computer instructions and data. Processing circuitry 1801 can be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 1801 can include two central processing units (CPUs). Data can be information in a form suitable for use by a computer.

In the depicted embodiment, input/output interface 1805 can be configured to provide a communication interface to an input device, output device, or input and output device. UE 1800 can be configured to use an output device via input/output interface 1805. An output device can use the same type of interface port as an input device. For example, a USB port can be used to provide input to and output from UE 1800. The output device can be a speaker, a sound card, a video card, a display, a monitor, a printer, an actuator, an emitter, a smartcard, another output device, or any combination thereof. UE 1800 can be configured to use an input device via input/output interface 1805 to allow and/or facilitate a user to capture information into UE 1800. The input device can include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display can include a capacitive or resistive touch sensor to sense input from a user. A sensor can be, for instance, an accelerometer, a gyroscope, a tilt sensor, a force sensor, a magnetometer, an optical sensor, a proximity sensor, another like sensor, or any combination thereof. For example, the input device can be an accelerometer, a magnetometer, a digital camera, a microphone, and an optical sensor.

In Figure 18, RF interface 1809 can be configured to provide a communication interface to RF components such as a transmitter, a receiver, and an antenna. Network connection interface 1811 can be configured to provide a communication interface to network 1843a. Network 1843a can encompass wired and/or wireless networks such as a local-area network (LAN), a wide-area network (WAN), a computer network, a wireless network, a telecommunications network, another like network or any combination thereof. For example, network 1843a can comprise a Wi-Fi network. Network connection interface 1811 can be configured to include a receiver and a transmitter interface used to communicate with one or more other devices over a communication network according to one or more communication protocols, such as Ethernet, TCP/IP, SONET, ATM, or the like. Network connection interface 1811 can implement receiver and transmitter functionality appropriate to the communication network links (e.g., optical, electrical, and the like). The transmitter and receiver functions can share circuit components, software or firmware, or alternatively can be implemented separately.

RAM 1817 can be configured to interface via bus 1802 to processing circuitry 1801 to provide storage or caching of data or computer instructions during the execution of software programs such as the operating system, application programs, and device drivers. ROM 1819 can be configured to provide computer instructions or data to processing circuitry 1801. For example, ROM 1819 can be configured to store invariant low-level system code or data for basic system functions such as basic input and output (I/O), startup, or reception of keystrokes from a keyboard that are stored in a non-volatile memory. Storage medium 1821 can be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 1821 can be configured to include operating system 1823, application program 1825 such as a web browser application, a widget or gadget engine or another application, and data file 1827. Storage medium 1821 can store, for use by UE 1800, any of a variety of various operating systems or combinations of operating systems.

Storage medium 1821 can be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1821 can allow and/or facilitate UE 1800 to access computer-executable instructions, application programs or the like, stored on transitory or non-transitory memory media, to off-load data, or to upload data. An article of manufacture, such as one utilizing a communication system can be tangibly embodied in storage medium 1821, which can comprise a device readable medium.

In Figure 18, processing circuitry 1801 can be configured to communicate with network 1843b using communication subsystem 1831. Network 1843a and network 1843b can be the same network or networks or different network or networks. Communication subsystem 1831 can be configured to include one or more transceivers used to communicate with network 1843b. For example, communication subsystem 1831 can be configured to include one or more transceivers used to communicate with one or more remote transceivers of another device capable of wireless communication such as another WD, UE, or base station of a radio access network (RAN) according to one or more communication protocols, such as IEEE 802.18, CDMA, WCDMA, GSM, LTE, UTRAN, WiMax, or the like. Each transceiver can include transmitter 1833 and/or receiver 1835 to implement transmitter or receiver functionality, respectively, appropriate to the RAN links (e.g., frequency allocations and the like). Further, transmitter 1833 and receiver 1835 of each transceiver can share circuit components, software or firmware, or alternatively can be implemented separately.

In the illustrated embodiment, the communication functions of communication subsystem 1831 can include data communication, voice communication, multimedia communication, short-range communications such as Bluetooth, near-field communication, location-based communication such as the use of the global positioning system (GPS) to determine a location, another like communication function, or any combination thereof. For example, communication subsystem 1831 can include cellular communication, Wi-Fi communication, Bluetooth communication, and GPS communication. Network 1843b can encompass wired and/or wireless networks such as a local-area network (LAN), a wide-area network (WAN), a computer network, a wireless network, a telecommunications network, another like network or any combination thereof. For example, network 1843b can be a cellular network, a Wi-Fi network, and/or a near-field network. Power source 1813 can be configured to provide alternating current (AC) or direct current (DC) power to components of UE 1800.

The features, benefits and/or functions described herein can be implemented in one of the components of UE 1800 or partitioned across multiple components of UE 1800. Further, the features, benefits, and/or functions described herein can be implemented in any combination of hardware, software or firmware. In one example, communication subsystem 1831 can be configured to include any of the components described herein. Further, processing circuitry 1801 can be configured to communicate with any of such components over bus 1802. In another example, any of such components can be represented by program instructions stored in memory that when executed by processing circuitry 1801 perform the corresponding functions described herein. In another example, the functionality of any of such components can be partitioned between processing circuitry 1801 and communication subsystem 1831. In another example, the non-computationally intensive functions of any of such components can be implemented in software or firmware and the computationally intensive functions can be implemented in hardware.

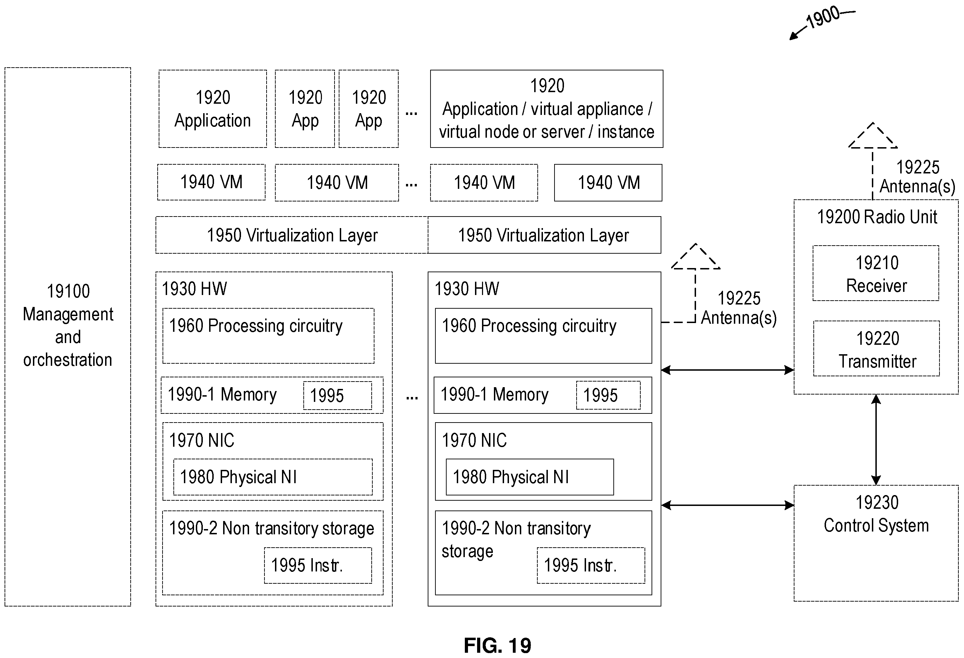

Figure 19 is a schematic block diagram illustrating a virtualization environment 1900 in which functions implemented by some embodiments can be virtualized. In the present context, virtualizing means creating virtual versions of apparatuses or devices which can include virtualizing hardware platforms, storage devices and networking resources. As used herein, virtualization can be applied to a node (e.g., a virtualized base station, a virtualized radio access node, virtualized core network node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein can be implemented as virtual components executed by one or more virtual machines implemented in one or more virtual environments 1900 hosted by one or more of hardware nodes 1930. Further, in embodiments in which the virtual node is not a radio access node or does not require radio connectivity (e.g., a core network node), then the network node can be entirely virtualized.

The functions can be implemented by one or more applications 1920 (which can alternatively be called software instances, virtual appliances, network functions, virtual nodes, virtual network functions, etc.) operative to implement some of the features, functions, and/or benefits of some of the embodiments disclosed herein. Applications 1920 are run in virtualization environment 1900 which provides hardware 1930 comprising processing circuitry 1960 and memory 1990. Memory 1990 contains instructions 1995 executable by processing circuitry 1960 whereby application 1920 is operative to provide one or more of the features, benefits, and/or functions disclosed herein.

Virtualization environment 1900, comprises general-purpose or special-purpose network hardware devices 1930 comprising a set of one or more processors or processing circuitry 1960, which can be commercial off-the-shelf (COTS) processors, dedicated Application Specific Integrated Circuits (ASICs), or any other type of processing circuitry including digital or analog hardware components or special purpose processors. Each hardware device can comprise memory 1990-1 which can be non-persistent memory for temporarily storing instructions 1995 or software executed by processing circuitry 1960. Each hardware device can comprise one or more network interface controllers (NICs) 1970, also known as network interface cards, which include physical network interface 1980. Each hardware device can also include non-transitory, persistent, machine-readable storage media 1990-2 having stored therein software 1995 and/or instructions executable by processing circuitry 1960. Software 1995 can include any type of software including software for instantiating one or more virtualization layers 1950 (also referred to as hypervisors), software to execute virtual machines 1940 as well as software allowing it to execute functions, features and/or benefits described in relation with some embodiments described herein.

Virtual machines 1940, comprise virtual processing, virtual memory, virtual networking or interface and virtual storage, and can be run by a corresponding virtualization layer 1950 or hypervisor. Different embodiments of the instance of virtual appliance 1920 can be implemented on one or more of virtual machines 1940, and the implementations can be made in different ways.

During operation, processing circuitry 1960 executes software 1995 to instantiate the hypervisor or virtualization layer 1950, which can sometimes be referred to as a virtual machine monitor (VMM). Virtualization layer 1950 can present a virtual operating platform that appears like networking hardware to virtual machine 1940.

As shown in Figure 19, hardware 1930 can be a standalone network node with generic or specific components. Hardware 1930 can comprise antenna 19225 and can implement some functions via virtualization. Alternatively, hardware 1930 can be part of a larger cluster of hardware (e.g.,such as in a data center or customer premise equipment (CPE)) where many hardware nodes work together and are managed via management and orchestration (MANO) 19100, which, among others, oversees lifecycle management of applications 1920.

Virtualization of the hardware is in some contexts referred to as network function virtualization (NFV). NFV can be used to consolidate many network equipment types onto industry standard high volume server hardware, physical switches, and physical storage, which can be located in data centers, and customer premise equipment.

In the context of NFV, virtual machine 1940 can be a software implementation of a physical machine that runs programs as if they were executing on a physical, non-virtualized machine. Each of virtual machines 1940, and that part of hardware 1930 that executes that virtual machine, be it hardware dedicated to that virtual machine and/or hardware shared by that virtual machine with others of the virtual machines 1940, forms a separate virtual network elements (VNE).

In the context of NFV, Virtual Network Function (VNF) is responsible for handling specific network functions that run in one or more virtual machines 1940 on top of hardware networking infrastructure 1930, and can correspond to application 1920 in Figure 19.

In some embodiments, one or more radio units 19200 that each include one or more transmitters 19220 and one or more receivers 19210 can be coupled to one or more antennas 19225. Radio units 19200 can communicate directly with hardware nodes 1930 via one or more appropriate network interfaces and can be used in combination with the virtual components to provide a virtual node with radio capabilities, such as a radio access node or a base station.

In some embodiments, some signalling can be affected with the use of control system 19230 which can alternatively be used for communication between the hardware nodes 1930 and radio units 19200.

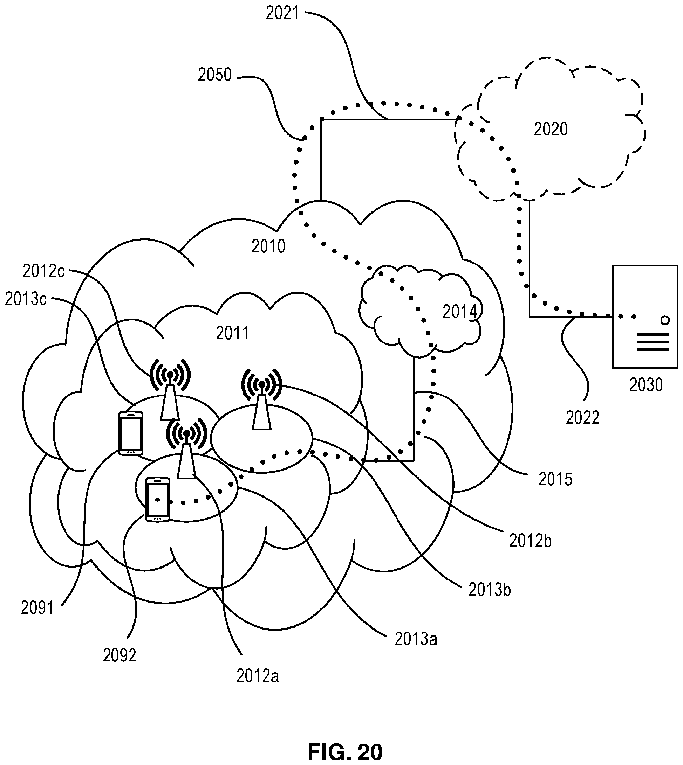

With reference to FIGURE 20, in accordance with an embodiment, a communication system includes telecommunication network 2010, such as a 3GPP-type cellular network, which comprises access network 2011, such as a radio access network, and core network 2020. Access network 2011 comprises a plurality of base stations 2012a, 2012b, 2012c, such as NBs, eNBs, gNBs or other types of wireless access points, each defining a corresponding coverage area 2013a, 2013b, 2013c. Each base station 2012a, 2012b, 2012c is connectable to core network 2014 over a wired or wireless connection 2015. A first UE 2091 located in coverage area 2013c can be configured to wirelessly connect to, or be paged by, the corresponding base station 2012c. A second UE 2092 in coverage area 2013a is wirelessly connectable to the corresponding base station 2012a. While a plurality of UEs 2091, 2092 are illustrated in this example, the disclosed embodiments are equally applicable to a situation where a sole UE is in the coverage area or where a sole UE is connecting to the

Telecommunication network 2010 is itself connected to host computer 2030, which can be embodied in the hardware and/or software of a standalone server, a cloud-implemented server, a distributed server or as processing resources in a server farm. Host computer 2030 can be under the ownership or control of a service provider, or can be operated by the service provider or on behalf of the service provider. Connections 2021 and 2022 between telecommunication network 2010 and host computer 2030 can extend directly from core network 2014 to host computer 2030 or can go via an optional intermediate network 2020. Intermediate network 2020 can be one of, or a combination of more than one of, a public, private or hosted network; intermediate network 2020, if any, can be a backbone network or the Internet; in particular, intermediate network 2020 can comprise two or more sub-networks (not shown).

The communication system of Figure 20 as a whole enables connectivity between the connected UEs 2091, 2092 and host computer 2030. The connectivity can be described as an over-the-top (OTT) connection 2050. Host computer 2030 and the connected UEs 2091, 2092 are configured to communicate data and/or signaling via OTT connection 2050, using access network 2011, core network 2020, any intermediate network 2020 and possible further infrastructure (not shown) as intermediaries. OTT connection 2050 can be transparent in the sense that the participating communication devices through which OTT connection 2050 passes are unaware of routing of uplink and downlink communications. For example, base station 2012 may not or need not be informed about the past routing of an incoming downlink communication with data originating from host computer 2030 to be forwarded (e.g., handed over) to a connected UE 2091. Similarly, base station 2012 need not be aware of the future routing of an outgoing uplink communication originating from the UE 2091 towards the host computer 2030.

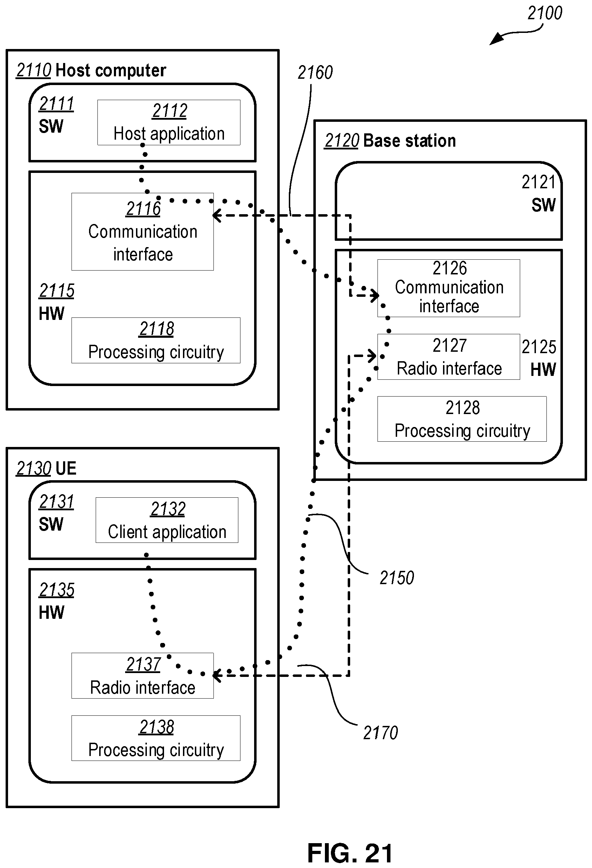

Example implementations, in accordance with an embodiment, of the UE, base station and host computer discussed in the preceding paragraphs will now be described with reference to Figure 21. In communication system 2100, host computer 2110 comprises hardware 2115 including communication interface 2116 configured to set up and maintain a wired or wireless connection with an interface of a different communication device of communication system 2100. Host computer 2110 further comprises processing circuitry 2118, which can have storage and/or processing capabilities. In particular, processing circuitry 2118 can comprise one or more programmable processors, application-specific integrated circuits, field programmable gate arrays or combinations of these (not shown) adapted to execute instructions. Host computer 2110 further comprises software 2111, which is stored in or accessible by host computer 2110 and executable by processing circuitry 2118. Software 2111 includes host application 2112. Host application 2112 can be operable to provide a service to a remote user, such as UE 2130 connecting via OTT connection 2150 terminating at UE 2130 and host computer 2110. In providing the service to the remote user, host application 2112 can provide user data which is transmitted using OTT connection 2150.

Communication system 2100 can also include base station 2120 provided in a telecommunication system and comprising hardware 2125 enabling it to communicate with host computer 2110 and with UE 2130. Hardware 2125 can include communication interface 2126 for setting up and maintaining a wired or wireless connection with an interface of a different communication device of communication system 2100, as well as radio interface 2127 for setting up and maintaining at least wireless connection 2170 with UE 2130 located in a coverage area (not shown in Figure 21) served by base station 2120. Communication interface 2126 can be configured to facilitate connection 2160 to host computer 2110. Connection 2160 can be direct or it can pass through a core network (not shown in Figure 21) of the telecommunication system and/or through one or more intermediate networks outside the telecommunication system. In the embodiment shown, hardware 2125 of base station 2120 can also include processing circuitry 2128, which can comprise one or more programmable processors, application-specific integrated circuits, field programmable gate arrays or combinations of these (not shown) adapted to execute instructions. Base station 2120 further has software 2121 stored internally or accessible via an external connection.

Communication system 2100 can also include UE 2130, whose hardware 2135 can include radio interface 2137 configured to set up and maintain wireless connection 2170 with a base station serving a coverage area in which UE 2130 is currently located. Hardware 2135 can also include processing circuitry 2138, which can comprise one or more programmable processors, application-specific integrated circuits, field programmable gate arrays or combinations of these (not shown) adapted to execute instructions. UE 2130 further comprises software 2131, which is stored in or accessible by UE 2130 and executable by processing circuitry 2138. Software 2131 includes client application 2132. Client application 2132 can be operable to provide a service to a human or non-human user via UE 2130, with the support of host computer 2110. In host computer 2110, an executing host application 2112 can communicate with the executing client application 2132 via OTT connection 2150 terminating at UE 2130 and host computer 2110. In providing the service to the user, client application 2132 can receive request data from host application 2112 and provide user data in response to the request data. OTT connection 2150 can transfer both the request data and the user data. Client application 2132 can interact with the user to generate the user data that it provides.

It is noted that host computer 2110, base station 2120 and UE 2130 illustrated in Figure 21 can be similar or identical to host computer 2030, one of base stations 2012a, 2012b, 2012c and one of UEs 2091, 2092 of Figure 20, respectively. This is to say, the inner workings of these entities can be as shown in Figure 21 and independently, the surrounding network topology can be that of Figure 20.

In Figure 21, OTT connection 2150 has been drawn abstractly to illustrate the communication between host computer 2110 and UE 2130 via base station 2120, without explicit reference to any intermediary devices and the precise routing of messages via these devices. Network infrastructure can determine the routing, which it can be configured to hide from UE 2130 or from the service provider operating host computer 2110, or both. While OTT connection 2150 is active, the network infrastructure can further take decisions by which it dynamically changes the routing (e.g., on the basis of load balancing consideration or reconfiguration of the network).

Wireless connection 1370 between the UE 1330 and the base station 1320 is in accordance with the teachings of the embodiments described throughout this disclosure. One or more of the various embodiments can be used to improve the performance of OTT services provided to the UE 1330 using the OTT connection 1350, in which the wireless connection 1370 forms the last segment. For example, enabling timely and efficient establishment of ANR between cells for a UE operating in multi-RAT multi-connectivity can be experienced by RAN users (*e.g.,* UEs) as higher and/or more consistent data throughput (*e.g.,* in bits/sec), reduced data latency (e.g., less OTT application buffering), and more reliable OTT application performance.

A measurement procedure can be provided for the purpose of monitoring data rate, latency and other network operational aspects on which the one or more embodiments improve. There can further be an optional network functionality for reconfiguring OTT connection 2150 between host computer 2110 and UE 2130, in response to variations in the measurement results. The measurement procedure and/or the network functionality for reconfiguring OTT connection 2150 can be implemented in software 2111 and hardware 2121 of host computer 2110 or in software 2131 and hardware 2135 of UE 2130, or both. In embodiments, sensors (not shown) can be deployed in or in association with communication devices through which OTT connection 2150 passes; the sensors can participate in the measurement procedure by supplying values of the monitored quantities exemplified above, or supplying values of other physical quantities from which software 2111, 2131 can compute or estimate the monitored quantities. The reconfiguring of OTT connection 2150 can include message format, retransmission settings, preferred routing etc.; the reconfiguring need not affect base station 2120, and it can be unknown or imperceptible to base station 2120. Such procedures and functionalities can be known and practiced in the art. In certain embodiments, measurements can involve proprietary UE signaling facilitating host computer 2110's measurements of throughput, propagation times, latency and the like. The measurements can be implemented in that software 2111 and 2131 causes messages to be transmitted, in particular empty or 'dummy' messages, using OTT connection 2150 while it monitors propagation times, errors etc.

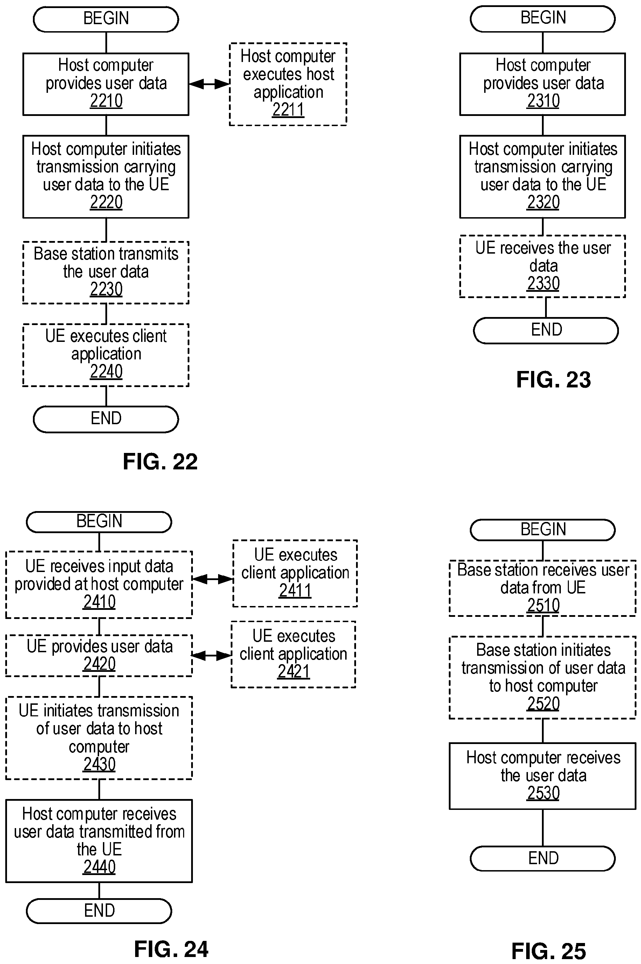

Figure 22 is a flowchart illustrating an exemplary method and/or procedure implemented in a communication system, in accordance with one embodiment. The communication system includes a host computer, a base station and a UE which, in some exemplary embodiments, can be those described with reference to other figures herein. For simplicity of the present disclosure, only drawing references to Figure 22 will be included in this section. In step 2210, the host computer provides user data. In substep 2211 (which can be optional) of step 2210, the host computer provides the user data by executing a host application. In step 2220, the host computer initiates a transmission carrying the user data to the UE. In step 2230 (which can be optional), the base station transmits to the UE the user data which was carried in the transmission that the host computer initiated, in accordance with the teachings of the embodiments described throughout this disclosure. In step 2240 (which can also be optional), the UE executes a client application associated with the host application executed by the host computer.

Figure 23 is a flowchart illustrating an exemplary method and/or procedure implemented in a communication system, in accordance with one embodiment. The communication system includes a host computer, a base station and a UE which can be those described with reference to other figures herein. For simplicity of the present disclosure, only drawing references to Figure 23 will be included in this section. In step 2310 of the method, the host computer provides user data. In an optional substep (not shown) the host computer provides the user data by executing a host application. In step 2320, the host computer initiates a transmission carrying the user data to the UE. The transmission can pass via the base station, in accordance with the teachings of the embodiments described throughout this disclosure. In step 2330 (which can be optional), the UE receives the user data carried in the transmission.

Figure 24 is a flowchart illustrating an exemplary method and/or procedure implemented in a communication system, in accordance with one embodiment. The communication system includes a host computer, a base station and a UE which can be those described with reference to other figures herein. For simplicity of the present disclosure, only drawing references to Figure 24 will be included in this section. In step 2410 (which can be optional), the UE receives input data provided by the host computer. Additionally or alternatively, in step 2420, the UE provides user data. In substep 2421 (which can be optional) of step 2420, the UE provides the user data by executing a client application. In substep 2411 (which can be optional) of step 2410, the UE executes a client application which provides the user data in reaction to the received input data provided by the host computer. In providing the user data, the executed client application can further consider user input received from the user. Regardless of the specific manner in which the user data was provided, the UE initiates, in substep 2430 (which can be optional), transmission of the user data to the host computer. In step 2440 of the method, the host computer receives the user data transmitted from the UE, in accordance with the teachings of the embodiments described throughout this disclosure.

Figure 25 is a flowchart illustrating an exemplary method and/or procedure implemented in a communication system, in accordance with one embodiment. The communication system includes a host computer, a base station and a UE which can be those described with reference to other figures herein. For simplicity of the present disclosure, only drawing references to Figure 25 will be included in this section. In step 2510 (which can be optional), in accordance with the teachings of the embodiments described throughout this disclosure, the base station receives user data from the UE. In step 2520 (which can be optional), the base station initiates transmission of the received user data to the host computer. In step 2530 (which can be optional), the host computer receives the user data carried in the transmission initiated by the base station.

The foregoing merely illustrates the principles of the disclosure. Various modifications and alterations to the described embodiments will be apparent to those skilled in the art in view of the teachings herein. It will thus be appreciated that those skilled in the art will be able to devise numerous systems, arrangements, and procedures that, although not explicitly shown or described herein, embody the principles of the disclosure and can be thus within the scope of the disclosure. Various exemplary embodiments can be used together with one another, as well as interchangeably therewith, as should be understood by those having ordinary skill in the art.

The term unit, as used herein, can have conventional meaning in the field of electronics, electrical devices and/or electronic devices and can include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, *etc.* Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification, drawings and exemplary embodiments thereof, can be used synonymously in certain instances, including, but not limited to, *e.g.,* data and information. It should be understood that, while these words and/or other words that can be synonymous to one another, can be used synonymously herein, that there can be instances when such words can be intended to not be used synonymously.

## Claims

1. A method, performed by a user equipment, UE, for reporting failures that occur during communication with a first cell associated with a first network node, the method comprising:
transmitting (1520) a request message to the first network node, wherein the request message is associated with a connection between the UE and a radio access network, RAN, and wherein the message is a Radio Resource Control, RRC, resume message or an RRC request message;
initiating (1530) a timer upon transmitting the request message;
performing (1540) integrity protection, IP, verification of a response to the request message;
in response to a failure of the IP verification, sending (1560) a failure report to a second network node, wherein the failure report includes first information related to the IP verification failure, and wherein performing (1540) the IP verification is based on receiving the response before expiration of the timer; and wherein the failure report is a resume or re-establishment failure report; and wherein
in response to expiration of the timer without receiving a response to the request message, sending (1570) a failure report to the second network node, wherein the failure report includes second information indicating the expiration of the timer, and wherein the failure report also includes an indication of whether the failure report includes the first information or the second information.

2. The method of claim 1, wherein:
the second network node is the same as the first network node; and
the failure report is sent to the second network node via a second cell different from the first cell.

3. The method of any of claims 1 or 2, wherein
the request message is associated with resuming a suspended connection between the UE and the RAN; and
the timer is T319.

4. The method of any of claims 1 or 2, wherein
the request message is associated with re-establishing a connection between the UE and the RAN after occurrence of a failure; and
the timer is T301.

5. The method of any of claims 1-4, wherein the first information in the failure report includes one or more of the following:
one or more cell identities associated with the first cell;
a network identity associated with the first cell;
frequency information associated with the first cell;
signal and/or interference measurements associated with the first cell;
signal and/or interference measurements associated with one or more neighbor cells of the first cell;
an identity associated with the first network node;
at least a portion of the received response;
at least a portion of the UE's security context; and
location information associated with the UE.

6. The method of any of claims 1-5, further comprising receiving (1510) at least a portion of the first information, included in the failure report, from a broadcast transmission by the first cell.

7. The method of any of claims 1-6, wherein performing (1540) an IP verification of the response comprises:
computing (1541) a first message authentication code - integrity, MAC-I, for the response based on the UE's security context; and
comparing (1542) the first MAC-I to a second MAC-I included in the response to determine if the first MAC-I matches the second MAC-I, wherein the lack of a match indicates the failure of the IP verification.

8. The method of claim 7, wherein the first information in the failure report includes the first MAC-I and the second MAC-I.

9. The method of any of claims 1-8, further comprising, in response to the failure of the IP verification, performing (1550) the following operations before sending the failure report:
transitioning to an idle state;
selecting a second cell associated with the second network node; and
establishing a connection to the RAN via the second cell.

10. The method of any of claims 1-9, wherein:
the second network node is part of the RAN; and
the first network node is a fake network node that is not part of the RAN.

11. A method for a second network node, in a radio access network, RAN, to process failure reports from one or more user equipment, UEs, the method comprising:
receiving (1620), from a UE, a failure report indicating a failure associated with a connection between the UE and the RAN while the UE was communicating with a first cell associated with a first network node, wherein the failure report is a resume or re-establishment failure report;
based on information included in the failure report, determining (1630) whether the failure was due to a failure of integrity protection, IP, verification of a response received by the UE from the first network node; and
based on determining that the failure is due to the failure of IP verification, performing (1640) one or more actions related to denying access, by UEs, to at least the first cell,
wherein the failure report includes one of the following:
first information related to the failure of IP verification of the response; or
second information identifying that the failure was due to expiration of a timer without receiving a response from the first network node, and wherein
the failure report further comprises an indication of whether the failure report includes the first information or the second information.

12. The method of claim 11, wherein
the failure report is associated with resuming a suspended connection between the UE and the RAN; and
the timer is T319.

13. The method of claim 11, wherein
the failure report is associated with re-establishing a connection between the UE and the RAN after occurrence of a failure; and
the timer is T301.

14. A user equipment, UE (1710, 1800, 2137) configured to report failures that occur during communication with a first cell associated with a first network node, the UE being further arranged to perform operations corresponding to any of the methods of claims 1-10.

15. A network node (500, 550, 1760, 1920, 2120), of a radio access network, RAN (599), configured to process failure reports from one or more user equipment, UEs, the network node comprising:
interface circuitry (1790, 1970, 19200, 2127) operable to communicate with the UEs; and
processing circuitry (1770, 1960, 2128) operably coupled to the interface circuitry, whereby the processing circuitry and the interface circuitry are configured to perform operations corresponding to any of the methods of claims 11-13.

## Patentansprüche

1. Verfahren, das von einer Benutzereinrichtung, UE, durchgeführt wird, zur Meldung von Fehlern, die während der Kommunikation mit einer ersten Zelle auftreten, die mit einem ersten Netzwerkknoten assoziiert ist, wobei das Verfahren umfasst:
Senden (1520) einer Anforderungsnachricht an den ersten Netzwerkknoten, wobei die Anforderungsnachricht mit einer Verbindung zwischen der UE und einem Funkzugangsnetzwerk, RAN, assoziiert ist, und wobei die Nachricht eine Funkressourcensteuerungs-,RRC- ,Wiederaufnahmenachricht oder eine RRC-Anforderungsnachricht ist;
Aktivieren (1530) eines Zeitgebers bei Senden der Anforderungsnachricht;
Durchführen (1540) von Integritätsschutz-,IP- ,Verifizierung einer Antwort auf die Anforderungsnachricht;
Senden (1560) einer Fehlermeldung an einen zweiten Netzwerkknoten in Reaktion auf einen Fehler der der IP-Verifizierung, wobei die Fehlermeldung erste Informationen in Bezug auf den IP-Verifizierungsfehler umfasst, und wobei das Durchführen (1540) der IP-Verifizierung auf einem Empfangen der Antwort vor Ablauf des Zeitgebers basiert; und wobei die Fehlermeldung eine Wiederaufnahme- oder Wiederherstellungsfehlermeldung ist;
Senden (1570) einer Fehlermeldung an den zweiten Netzwerkknoten in Reaktion auf den Ablauf des Zeitgebers ohne Empfang einer Antwort auf die Anforderungsnachricht, wobei die Fehlermeldung zweite Informationen umfasst, die den Ablauf des Zeitgebers anzeigen, und wobei die Fehlermeldung außerdem eine Anzeige dessen umfasst, ob die Fehlermeldung die ersten Informationen oder die zweiten Informationen umfasst.

2. Verfahren nach Anspruch 1, wobei:
der zweite Netzwerkknoten derselbe wie der erste Netzwerkknoten ist; und
die Fehlermeldung über eine zweite Zelle an den zweiten Knoten gesendet wird, die von der ersten Zelle verschieden ist.

3. Verfahren nach einem der Ansprüche 1 bis 2, wobei die Anforderungsnachricht mit der Wiederaufnahme einer unterbrochenen Verbindung zwischen der UE und dem RAN assoziiert ist; und
der Zeitgeber T319 ist.

4. Verfahren nach einem der Ansprüche 1 bis 2, wobei die Anforderungsnachricht mit der Wiederherstellung einer Verbindung zwischen der UE und dem RAN nach dem Auftreten eines Fehlers assoziiert ist; und
der Zeitgeber T301 ist.

5. Verfahren nach einem der Ansprüche 1 bis 4, wobei ersten Informationen in der Fehlermeldung eines oder mehrere von Folgenden umfassen:
eine oder mehrere Zellidentitäten, die mit der ersten Zelle assoziiert sind;
eine Netzwerkidentität, die mit der ersten Zelle assoziiert ist;
Frequenzinformationen, die mit der ersten Zelle assoziiert sind;
Signal- und/oder Störungsmessungen, die mit der ersten Zelle assoziiert sind;
Signal- und/oder Störungsmessungen, die mit einer oder mehreren Nachbarzellen der ersten Zelle assoziiert sind;
eine Identität, die mit dem ersten Netzwerkknoten assoziiert ist;
mindestens einen Teil der empfangenen Antwort;
mindestens einen Teil des Sicherheitskontexts der UE; und
Standortinformationen, die mit der UE assoziiert sind.

6. Verfahren nach einem der Ansprüche 1 bis 5, ferner umfassend ein Empfangen (1510) mindestens eines Teils der ersten Informationen, die in der Fehlermeldung enthalten sind, aus einer Broadcast-Übertragung durch die erste Zelle.

7. Verfahren nach einem der Ansprüche 1 bis 6, wobei das Durchführen (1540) einer IP-Verifizierung der Antwort umfasst:
Berechnen (1541) einer ersten Nachrichtenauthentisierungscode-Integrität, MAC-I, für die Antwort basierend auf dem Sicherheitskontext der UE; und
Vergleichen (1542) der ersten MAC-I mit einer zweiten MAC-I, die in der Antwort enthalten ist, um zu bestimmen, ob die erste MAC-I mit der zweiten MAC-I übereinstimmt, wobei das Fehlen einer Übereinstimmung den Fehler der IP-Verifizierung angibt.

8. Verfahren nach Anspruch 7, wobei die ersten Informationen in der Fehlermeldung die erste MAC-I und die zweite MAC-I umfassen.

9. Verfahren nach einem der Ansprüche 1 bis 8, ferner umfassend ein Durchführen (1550) der folgenden Operationen in Reaktion auf den Fehler der IP-Verifizierung vor dem Senden der Fehlermeldung:
Wechseln in einen Ruhezustand;
Auswählen einer zweiten Zelle, die mit dem zweiten Netzwerkknoten assoziiert ist; und
Herstellen einer Verbindung mit dem RAN über die zweite Zelle.

10. Verfahren nach einem der Ansprüche 1 bis 9, wobei:
der zweite Netzwerkknoten Teil des RAN ist; und
der erste Netzwerkknoten ein Fake-Netzwerkknoten ist,
der nicht Teil des RAN ist.

11. Verfahren für einen zweiten Netzwerkknoten in einem Funkzugangsnetzwerk, RAN, zur Verarbeitung von Fehlermeldungen von einer oder mehreren Benutzereinrichtungen, UEs, wobei das Verfahren umfasst:
Empfangen (1620) von einer UE einer Fehlermeldung, die einen Fehler anzeigt, der mit einer Verbindung zwischen der UE und dem RAN assoziiert ist, während die UE mit einer ersten Zelle kommunizierte, die mit einem ersten Netzwerkknoten assoziiert ist, wobei die Fehlermeldung eine Wiederaufnahme- oder Wiederherstellungsfehlermeldung ist;
Bestimmen (1630) basierend auf Informationen, die in der Fehlermeldung enthalten sind, ob der Fehler auf einen Fehler einer Integritätsschutz-,IP- ,Verifizierung einer Antwort zurückzuführen war, die durch die UE vom ersten Netzwerkknoten empfangen wurde; und
Durchführen (1640) einer oder mehrerer Aktionen in Bezug auf eine Verweigerung von Zugang durch UEs zumindest zu der ersten Zelle basierend auf einem Bestimmen, dass der Fehler auf den IP-Verifizierungsfehler zurückzuführen ist,
wobei die Fehlermeldung eines oder mehrere von Folgenden umfasst:
erste Informationen in Bezug auf den Fehler der IP-Verifizierung der Antwort; oder
zweite Informationen, die identifizieren, dass der Fehler auf den Ablauf eines Zeitgebers ohne Empfang einer Antwort vom ersten Netzwerkknoten zurückzuführen war, und wobei die Fehlermeldung ferner eine Anzeige dessen umfasst, ob die Fehlermeldung die ersten Informationen oder die zweiten Informationen umfasst.

12. Verfahren nach Anspruch 11, wobei
die Fehlermeldung mit der Wiederaufnahme einer unterbrochenen Verbindung zwischen der UE und dem RAN assoziiert ist; und
der Zeitgeber T319 ist.

13. Verfahren nach Anspruch 11, wobei
die Fehlermeldung mit der Wiederherstellung einer Verbindung zwischen der UE und dem RAN nach dem Auftreten eines Fehlers assoziiert ist; und
der Zeitgeber T301 ist.

14. Benutzereinrichtung, UE, (1710, 1800, 2137) die zum Melden von Fehlern konfiguriert ist, die während der Kommunikation mit einer ersten Zelle auftreten, die mit einem ersten Netzwerkknoten assoziiert ist, wobei die UE ferner zum Durchführen von Operationen ausgelegt ist, die einem der Verfahren nach Anspruch 1 bis 10 entsprechen.

15. Netzwerkknoten (500, 550, 1760, 1920, 2120) eines Funkzugangsnetzwerks, RAN, (599), der zum Verarbeiten von Fehlermeldungen von einer oder mehreren Benutzereinrichtungen, UEs, konfiguriert ist, wobei der Netzwerkknoten umfasst:
Schnittstellenschaltungsanordnung (1790, 1970, 19200, 2127), die zum Kommunizieren mit den UEs ausgelegt ist; und
Verarbeitungsschaltungsanordnung (1770, 1960, 2128), die mit der Schnittstellenschaltungsanordnung funktionell gekoppelt ist, wobei die Verarbeitungsschaltungsanordnung und die Schnittstellenschaltungsanordnung zum Durchführen von Operationen konfiguriert sind, die einem der Verfahren nach Anspruch 11 bis 13 entsprechen.

## Revendications

1. Procédé, réalisé par un équipement utilisateur, UE, pour rapporter des échecs survenant au cours d'une communication avec une première cellule associée à un premier nœud de réseau, le procédé comprenant :
la transmission (1520) d'un message de demande au premier nœud de réseau, dans lequel le message de demande est associé à une connexion entre l'UE et un réseau d'accès radio, RAN, et dans lequel le message est un message de reprise de commande de ressources radio, RRC, ou un message de demande RRC ;
le lancement (1530) d'une minuterie à la transmission du message de demande ;
la réalisation (1540) d'une vérification de protection d'intégrité, IP, d'une réponse au message de demande ;
en réponse à un échec de la vérification IP, l'envoi (1560) d'un rapport d'échec à un deuxième nœud de réseau, dans lequel le rapport d'échec inclut des premières informations relatives à l'échec de vérification IP, et dans lequel la réalisation (1540) de la vérification IP est basée sur la réception de la réponse avant une expiration de la minuterie ; et dans lequel le rapport d'échec est un rapport d'échec de reprise ou de rétablissement ; et dans lequel en réponse à une expiration de la minuterie sans avoir reçu de réponse au message de demande, l'envoi (1570) d'un rapport d'échec au deuxième nœud de réseau, dans lequel le rapport d'échec inclut des deuxièmes informations indiquant l'expiration de la minuterie, et
dans lequel le rapport d'échec inclut également une indication indiquant si le rapport d'échec inclut les premières informations ou les deuxièmes informations.

2. Procédé selon la revendication 1, dans lequel :
le deuxième nœud de réseau est le même que le premier nœud de réseau ; et
le rapport d'échec est envoyé au deuxième nœud de réseau par l'intermédiaire d'une deuxième cellule différente de la première cellule.

3. Procédé selon la revendication 1 ou 2, dans lequel
le message de demande est associé à la reprise d'une connexion suspendue entre l'UE et le RAN ; et
la minuterie est T319.

4. Procédé selon la revendication 1 ou 2, dans lequel
le message de demande est associé au rétablissement d'une connexion entre l'UE et le RAN après une survenance d'un échec ; et
la minuterie est T301.

5. Procédé selon l'une quelconque des revendications 1 à 4, dans lequel les premières informations dans le rapport d'échec incluent une ou plusieurs parmi ce qui suit :
une ou plusieurs identités de cellule associées à la première cellule ;
une identité de réseau associée à la première cellule ;
des informations de fréquence associées à la première cellule ;
des mesures de signal et/ou d'interférence associées à la première cellule ;
des mesures de signal et/ou d'interférence associées à une ou plusieurs cellules voisines de la première cellule ;
une identité associée au premier nœud de réseau ;
au moins une portion de la réponse reçue ;
au moins une portion du contexte de sécurité de l'UE ;
et
des informations d'emplacement associées à l'UE.

6. Procédé selon l'une quelconque des revendications 1 à 5, comprenant en outre la réception (1510) d'au moins une portion des premières informations, incluses dans le rapport d'échec, depuis une transmission de diffusion par la première cellule.

7. Procédé selon l'une quelconque des revendications 1 à 6, dans lequel la réalisation (1540) d'une vérification IP de la réponse comprend :
le calcul (1541) d'un premier code d'authentification de message pour une protection de l'intégrité, MAC-I,
pour la réponse sur la base du contexte de sécurité de l'UE ; et
la comparaison (1542) du premier MAC-I à un deuxième MAC-I inclus dans la réponse pour déterminer si le premier MAC-I correspond au deuxième MAC-I, dans lequel l'absence de correspondance indique l'échec de la vérification IP.

8. Procédé selon la revendication 7, dans lequel les premières informations dans le rapport d'échec incluent le premier MAC-I et le deuxième MAC-I.

9. Procédé selon l'une quelconque des revendications 1 à 8, comprenant en outre, en réponse à l'échec de la vérification IP, la réalisation (1550) des opérations suivantes avant l'envoi du rapport d'échec :
le passage dans un état de veille ;
la sélection d'une deuxième cellule associée au deuxième nœud de réseau ; et
l'établissement d'une connexion au RAN par l'intermédiaire de la deuxième cellule.

10. Procédé selon l'une quelconque des revendications 1 à 9, dans lequel :
le deuxième nœud de réseau fait partie du RAN ; et
le premier nœud de réseau est un faux nœud de réseau qui ne fait pas partie du RAN.

11. Procédé pour un deuxième nœud de réseau, dans un réseau d'accès radio, RAN, pour traiter des rapports d'échec provenant d'un ou plusieurs équipements utilisateurs, UE, le procédé comprenant :
la réception (1620), depuis un UE, d'un rapport d'échec indiquant un échec associé à une connexion entre l'UE et le RAN pendant que l'UE était en communication avec une première cellule associée à un premier nœud de réseau, dans lequel le rapport d'échec est un rapport d'échec de reprise ou de rétablissement ;
sur la base d'informations incluses dans le rapport d'échec, la détermination (1630) si l'échec était dû à un échec de vérification de protection d'intégrité, IP,
d'une réponse reçue par l'UE depuis le premier nœud de réseau ; et
sur la base de la détermination que l'échec est dû à l'échec de vérification IP, la réalisation (1640) d'une ou plusieurs actions relatives à un refus d'accès, par des UE, à au moins la première cellule,
dans lequel le rapport d'échec inclut l'une parmi ce qui suit :
des premières informations relatives à l'échec de vérification IP de la réponse ; ou
des deuxièmes informations identifiant que l'échec était dû à une expiration d'une minuterie sans avoir reçu de réponse du premier nœud de réseau, et dans lequel le rapport d'échec comprend en outre une indication indiquant si le rapport d'échec inclut les premières informations ou les deuxièmes informations.

12. Procédé selon la revendication 11, dans lequel
le rapport d'échec est associé à la reprise d'une connexion suspendue entre l'UE et le RAN ; et
la minuterie est T319.

13. Procédé selon la revendication 11, dans lequel
le rapport d'échec est associé au rétablissement d'une connexion entre l'UE et le RAN après la survenance d'un échec ; et
la minuterie est T301.

14. Equipement utilisateur, UE (1710, 1800, 2137) configuré pour rapporter des échecs survenant au cours d'une communication avec une première cellule associée à un premier nœud de réseau, l'UE étant en outre agencé pour réaliser des opérations correspondant à l'un quelconque des procédés selon les revendications 1 à 10.

15. Nœud de réseau (500, 550, 1760, 1920, 2120), d'un réseau d'accès radio, RAN (599), configuré pour traiter des rapports d'échec provenant d'un ou plusieurs équipements utilisateurs, UE, le nœud de réseau comprenant :
une circuiterie d'interface (1790, 1970, 19200, 2127) exploitable pour communiquer avec les UE ; et
une circuiterie de traitement (1770, 1960, 2128) couplée opérationnellement à la circuiterie d'interface, de telle manière que la circuiterie de traitement et la circuiterie d'interface soient configurés pour réaliser des opérations correspondant à l'un quelconque des procédés selon les revendications 11 à 13.
